# EUROPEAN PATENT APPLICATION

(11) **EP 1 555 170 A2**
(43) Date of publication of application: **20.07.2005**
(21) Application number: 05000595.8
(22) Date of filing: 13.01.2005
(51) Int. Cl.: B60R 21/20

(54) **Vehicle steering apparatus**

(30) Priority: 14.01.2004 JP 2004006599; 08.11.2004 JP 2004323883; 14.01.2004 JP 2004007012
(71) Applicant: TAKATA CORPORATION, Minato-ku, Tokyo 106-8510 (JP)
(72) Inventor: Sugimoto, Shinichi, Tokyo 106-8510 (JP)
(74) Representative: VOSSIUS & PARTNER

(57) **Abstract**

To provide a steering apparatus which has a relatively-smaller steering diameter-direction size and of which an airbag system body is straightly withdrawn in a steering axis direction when it is pressed in the airbag system of a parallel moving type in a steering axis direction, and to provide a technology effective for allowing a horn mechanism of a steering apparatus mounted on a vehicle to smoothly work.

A guide frame 40 guiding an airbag system body 20 to be parallel-moved in the extension direction of a steering shaft S is provided below the airbag system body 20. Respective arms 46L, 46R, 54L, and 54R of the guide frame 40 are fixed to a steering base 1 to rotate about a rotation axis 50a of each one end. The left arms 46L and 54L and the right arms 46R and 54R rotate while interlocking with each other, respectively, by engaging pinions 50 and 50 fixed to each one end with each other. The other end of each arm 46L, 46R, 54L, and 54R is rotatably connected to the rear surface of a retainer 22 through a ball joint 52. A horn switch apparatus 100 mounted on a vehicle is provided with a link mechanism 129 permitting the movement of a module cover 114 of an airbag system 110 subjected to pressing operation for allowing a horn to work in a predetermined direction passing through an initial position and a working position and regulating the movement of the module cover in a direction other than the predetermined direction.

## Description

The present invention relates to a technology of constructing a steering apparatus to be mounted on a vehicle such as an automobile. Furthermore, the present invention relates to a steering apparatus having a horn switch and more particularly to a steering apparatus in which a horn switch is turned on by means of movement of an airbag system body or a module cover toward a steering wheel when the module cover is pressed.

Conventionally, structures of steering wheels mounted with a horn mechanism have been known (for example, see JP-A-11-34882).

In JP-A-11-34882, a horn switch apparatus in which a bracket having a moving contact and being biased toward a rider with a coil spring can be relatively moved up and down through a bush relative to a support plate provided with a stationery contact is disclosed. In this construction, by allowing the rider to press a pad cover, the bracket is moved toward the support plate along the bush against the biasing force of the plural coil springs, and thus the moving contact comes in contact with the stationery contact, so that the horn rings.

Although a specific structure of the steering apparatus fitted with a horn mechanism is disclosed in JP-A-11-34882, there has been required a further technical study for accomplishing the thoroughly smooth working of the horn mechanism.

In a known steering wheel of an automobile provided with a driver airbag system, etc., when a module cover of the airbag system is pressed, an airbag system body or the module cover is moved toward the steering wheel, contacts of a horn switch are closed, and thus a horn rings.

As an example of this kind of steering apparatus, US-2003/0025308A1 describes that when the steering wheel is pressed from the upside, the airbag system is withdrawn through parallel movement and the horn switch is turned on.

In the aforementioned publication, the steering wheel is supported by an end of a parallel link extending in a direction perpendicular to a steering axis direction, and the other end of the parallel link is fixed to a steering wheel body. The horn switch is disposed at the rear surface side of the airbag system, and the airbag system is biased by a spring provided in the horn switch in an upward direction (which is an axis direction of a steering column and is in a direction toward a driver).

In the aforementioned publication, when the steering wheel is pressed from the upside, the airbag system is guided by the parallel link and is parallel-moved in the steering axis direction without inclination.

In this way, when the airbag system is parallel-moved, the reactive force applied to a finger tip of a driver from the airbag system is constant, even if any position of the upper surface of the airbag system is pressed.

In US-2003/0025308A1, when the airbag system body is pressed and withdrawn; the parallel link is slightly shifted in a horizontal direction, so that it is necessary to set a large allowance (a gap) between the side surface of the airbag system body and the steering wheel. Since the base end of the parallel link (bridge 20' in the publication) is disposed at the lateral circumference side of a wheel body, the steering diameter-direction size of the airbag system including the parallel link is increased.

The present invention is contrived in view of such a situation, and it is an object of the present invention to provide a technology effective for allowing a horn mechanism of a steering apparatus mounted on a vehicle to smoothly work. It is a further object of the present invention to provide a steering apparatus in which an airbag system body is straightly withdrawn in a steering axis direction when it is pressed in the airbag system of a parallel moving type in a steering axis direction. It is another object of the present invention to provide an driver airbag system having a steering diameter-direction size smaller than that of a conventional example in one aspect.

These objects are achieved with the features of the claims.

According to a first aspect of the present invention, there is a steering apparatus comprising: an airbag system body provided in a steering wheel; guiding means guiding parallel movement of the airbag system body or a module cover thereof in a steering axis direction; and a horn switch of which contacts are closed by means of the movement of the airbag system body or the module cover, wherein the guiding means comprises arms of which one ends are locked or engaged with each other, the other ends extend in a direction in which they recede from each other, and the one ends are supported or connected so as to freely rotate about the steering wheel. The one ends may rotate about the steering wheel in the steering axis direction, wherein the one ends of the arms are locked with each other such that when one arm rotates in the steering axis direction, the arms rotate in the same steering axis direction interlocking with the rotation of the one arm. The other ends of the arms are connected to the airbag system body or the module cover.

According to a further aspect, the other ends of the arms are connected to a bottom portion of the airbag system body or the module cover.

According to a further aspect, the one ends of the arms are engaged and locked with each other.

According to a further aspect, the one end of each arm is provided with a pinion and the pinions are engaged with each other.

According to a further aspect, the one end of the one arm is provided with a protruding portion protruding toward a counter arm, the one end of the counter arm is provided with a locking portion, and the protruding portion and the locking portion are locked with each other.

According to a further aspect, the locking portion is a concave portion.

According to a further aspect, a spring biasing the airbag system body or the module cover is provided as biasing means biasing the hom switch in a contact-opening direction.

According to a further aspect, a spring is attached to the arms as biasing means biasing the horn switch in a contact-opening direction.

According to a further aspect, the one ends of the arms are locked so as to be interlocked with each other through springs, and wherein the springs bias the arms in a direction in which the contacts of the horn switch are opened.

According to a further aspect, each spring has a wound portion and a stretched portion stretched from the wound portion in a direction in which they recede from each other, wherein the wound portion is retained in the one arm, and wherein one end of the stretched portion is fixed to the one arm and the other end of the stretched portion is fixed to the other arm.

According to a further aspect, the one arm is provided with a spring retaining protrusion and the wound portion of each spring is fitted to the spring retaining protrusion.

In the steering apparatus according to the present invention, a pair of arms of the guiding means rotates such that one end approaches and recedes from the steering wheel using the other end as a rotation center. Since the other ends of the arms extend in the direction in which they recede from each other, the airbag system body connected to the other ends is moved straightly parallel without shifting in a direction intersecting the steering axis direction with the rotation of the arms, when the airbag system body or the module cover is pressed.

In the steering apparatus according to the present invention, since the airbag system body is parallel-moved toward the steering wheel, the reactive force applied to the finger tip of an operator (driver) from the module cover is constant, even if any position on the upper surface of the module cover (the airbag system body) is pressed.

As a result, the allowance between the side surface of the airbag system body and the steering wheel can be reduced.

In the steering apparatus according to a further aspect, since the other end of each arm is connected to the bottom surface of the airbag system body and each arm does not protrude laterally from the airbag system body, it is possible to relatively reduce the steering diameter-direction size of the driver airbag system.

In the steering apparatus according to a further aspect, since the one ends of the arms are engaged with each other, both arms can be securely interlocked with each other.

In the steering apparatus according to a further aspect, since the pinions of both arms are engaged with each other, both arms can be smoothly interlocked.

In the steering apparatus according to further aspects, since the structure is relatively simplified, it is possible to reduce the cost of constructing the system.

As in a further aspect, in the present invention, a spring biasing the airbag system body or the module cover may be provided as biasing means biasing the horn switch in a contact-opening direction. In addition, as in a further aspect, as the biasing means, a spring may be provided in the arms.

As in a further aspect, the one ends of the arms may be locked so as to be interlocked with each other through a spring and the spring may function as the biasing means.

In the steering apparatus according to a further aspect, since the wound portion is provided in the spring, the wound portion is wrenched and a restoring force is sufficiently secured at the time of rotating the arms.

In the steering apparatus according to a further aspect, since the wound portion is retained in the spring retaining protrusion of the arm, the wound portion is securely wrenched with the rotation of the arms.

The steering apparatus according to a further aspect is a steering apparatus for a vehicle in which a steering wheel of the vehicle is fitted with a horn mechanism. The steering apparatus according to the present invention can widely include an assembly that the horn mechanism, etc. has been fitted to the steering wheel, a structure having not been fitted to the steering wheel, etc.

The steering apparatus has a pressing portion which can be moved between an initial position and a working position, that is, a portion to be pressed by a rider. In the present invention, the "initial position" is defined as a set position (standby position) of the pressing portion before a rider presses the pressing portion, and the "working position" is defined as a set position of the pressing portion when the horn works. Typically, a structure that the pressing portion is set to the initial position in a state where the pressing portion is biased by elastic biasing means such as a coil spring, a plate spring, etc. is used. Then, the rider presses the pressing portion to move the pressing portion to the working position, thereby allowing the horn to work. That is, the horn (klaxon) rings by moving the pressing portion to a predetermined working position. For example, by bringing two contacts of a horn switch into contact with each other and electrically connecting them, the horn can ring. On the other hand, by allowing the rider to release the pressing of the pressing portion and moving the pressing portion to the initial position, the working of the horn is released. That is, by allowing the pressing portion to be moved to the initial position from the working position, the ringing of the horn (klaxon) is released.

It is good enough for the present invention that a pressing component of a direction toward the working position from the initial position can be obtained by pressing the pressing portion, and the pressing direction (application direction of the pressing force) in which the pressing portion is pressed and the movement direction in which the pressing portion may be matched or not. As a case where the pressing direction and the movement direction are not matched, the pressing direction and the movement direction may intersect each other. Even in this case, the pressing component of the direction toward the working position from the initial position is obtained by pressing the pressing portion.

In the present invention, the steering apparatus comprises movement-direction defining means capable of defining the movement direction of the pressing portion. The movement-direction defining means has a function of permitting the movement of the pressed pressing portion in a predetermined direction passing through the initial position and the working position and regulating the movement of the pressed pressing portion in a direction other than the predetermined direction. Through the operation of the movement-direction defining means, the movement direction of the pressing portion is defined as a direction corresponding to the predetermined direction. As a typical example of the movement of the pressing portion in the "direction other than the predetermined direction", the pressing portion can be moved obliquely about the predetermined direction. In this way, the movement-direction defining means of the present invention has a function as a stabilizer controlling the movement direction.

The "regulation" in the present invention means that it is good enough to regulate (prevent) the movement of the pressing portion in a direction other than the predetermined direction, and a case where the movement of the pressing portion in a direction other than the predetermined direction is slightly permitted for the reason in assembling, in addition to a case where the movement of the pressing portion in a direction other than the predetermined direction is completely restricted, can be included in the "regulation" of the present invention.

According to the steering apparatus of a further aspect, since the movement direction of the pressing portion is defined and accurately controlled by the movement-direction defining means, the inclined movement about the predetermined direction is prevented when the pressing portion is moved in the predetermined direction from the initial position to the working position. As a result, even when a rider presses any portion of the pressing portion, the pressing force due to the pressing is uniformly applied to the pressing portion.

The size of the pressing portion (the surface area of the pressing portion) which can be pressed by a rider is generally set to as large as possible in consideration of manipulability of the smooth pressing. In this case, since the portion which can be pressed by a rider is wide, a rider may press an end of the pressing portion in a plan view of the steering wheel and may press a center of the pressing portion. Like the steering apparatus described in JP-A-11-34882, in the steering apparatus not comprising the movement-direction defining means of the present invention, the force required for allowing the horn to work is different depending upon which part of the pressing portion is pressed when the rider presses the pressing portion. That is, when the center of the pressing portion is pressed, the pressing force corresponding to the elastic biasing force applied from the all the coil springs is required, but when the end of the pressing portion is pressed, the pressing force corresponding to the elastic biasing force applied from a part of the coil springs may be good enough. In this way, in the conventional steering apparatus, the pressing force required for allowing the horn to work is dependent upon positions of the pressing portion which is pressed.

Therefore, the movement-direction defining means of the present invention is provided. In the steering apparatus having the movement-direction defining means of the present invention, the pressing force required for allowing the horn to work can be kept constant regardless of the position of the pressing portion which is pressed by a rider, so that it is possible to accomplish the smooth movement in the horn mechanism of the steering apparatus.

In the steering apparatus according to a further aspect, the movement-direction defining means has a structure in which a plurality of long link frames is connected with a rotating shaft. Typically, a structure in which two long link frames are connected with the rotating shaft to form an approximately X-shaped structural body may be employed. In the present invention, one end of each link frame is fixed to the pressing portion and the other end of each link frame is fixed to the base portion of the horn switch apparatus. Accordingly, the pressing portion as a moving group and the base portion as a stationery group are connected to each other through the movement-direction defining means having a plurality of long link frames and the rotating shaft. In this structure, by allowing the plurality of link frames to rotate about the rotating shaft in the approaching direction in which the link frames approach each other, the pressing portion and the base portion approach each other. That is, the gap between the pressing portion and the base portion becomes narrower than that before the rotation is started, and thus the pressing portion is moved to the working position. On the contrary, by allowing the plurality of link frames to rotate about the rotating shaft in the receding direction in which the link frames recede from each other, the pressing portion and the base portion recede from each other. That is, the gap between the pressing portion and the base portion becomes greater and thus the pressing portion is moved to the initial position.

According to the steering apparatus of a further aspect, the movement-direction defining means defining the movement direction of the pressing portion can be put into practice with a simple structure employing the plurality of long link frames and the rotating shaft.

In the steering apparatus according to a further aspect, the movement-direction defining means has a structure that one end of each link frame is fixed in a one-touch way to the pressing portion through a clip and the other end of each link frame is fixed in a one-touch way to the base portion through a clip. The "one-touch way" of the present invention can widely include manipulating actions which can be easily performed by an operator through single manipulation such as pressing manipulation, fitting manipulation, hooking manipulation, etc.

The clip may be integrally formed to each link frame or may be detachably or fixedly fixed to each link frame after individual formation thereof. As an example of the clip, a clip made of resin having a large-diameter portion larger than the diameter of an inserting hole formed in the pressing portion and the base portion may be used. By inserting the large-diameter portion of the resin clip into the inserting hole, the clip is fixed to the pressing portion and the base portion.

According to the steering apparatus of a further aspect, the movement-direction defining means comprising the plurality of long link frames and the rotating shaft can be fitted to the pressing portion and the base portion.

In the steering apparatus according to a further aspect, the pressing portion or the base portion has a longitudinally-opened long hole. At least one end of each link frame has a locking portion which can be moved along the long hole. In the present invention, the locking portion may be provided at any one end of each link frame and the locking portion may be provided at both ends of each link frame.

When the plurality of link frames rotates about the rotating shaft in the approaching direction or the receding direction, the locking portion is slid along the long hole. That is, when the plurality of link frames rotates in the approaching direction, the movement of the locking portion in the direction receding from the rotating shaft is guided with the long hole, so that the movement of the pressing portion toward the working position can be smoothly performed. On the other hand, when the plurality of link frames rotates in the receding direction, the movement of the locking portion in the receding direction approaching the rotating shaft is guided with the long hole, so that the movement of the pressing portion toward the initial position can be smoothly performed. Here, the "long hole" means that it is good enough to have a longitudinally extending portion, and various shapes may be employed within a range in which the desired cooperation with the locking portion. For example, a long hole extending in a linear line shape, a long hole extending in a curved line shape, a long hole extending stepwise, etc. may be used. Typically, as a long hole extending in a linear line shape, the "long hole" of the present invention can be constructed using a long hole extending in a direction intersecting the predetermined direction passing through the initial position and the working position, for example, in a direction perpendicular to the predetermined direction.

According to the steering apparatus of a further aspect, the movement of the pressing portion toward the working position or the initial position can be smoothly performed with cooperation of the locking portion with the long hole.

In the steering apparatus according to a further aspect, an airbag mechanism comprising at least an airbag, an airbag cover, and gas supply means is mounted on the pressing portion of the steering apparatus. The airbag is unfolded and expanded in a rider protecting area at the time of collision of a vehicle. The airbag cover is a cover that covers the rider side of the airbag. The gas supply means supplies unfolding and expanding gas to the airbag. In this construction, when the gas supply means works and supplies the unfolding and expanding gas to the airbag at the time of collision of a vehicle, the airbag is unfolded and expanded toward the rider protecting area while cleaving the airbag cover along a tearaway line.

According to the steering apparatus of a further aspect, it is possible to accomplish a reasonable structure that the airbag mechanism is mounted on the pressing portion.

In the steering apparatus according to a further aspect, the movement-direction defining means is constructed as a pre-assembled body in which the movement-direction defining means is fitted in advance to the pressing portion. For example, the movement-direction defining means is assembled to the pressing portion with a clip described in the third aspect. By assembling the pre-assembled body to the steering wheel of a vehicle, the steering apparatus is formed.

According to the steering apparatus of a further aspect, it is possible to enhance a fitting ability (assembling ability) when the movement-direction defining means is fitted to the steering wheel of a vehicle.

A further aspect of the present invention provides a steering apparatus, wherein biasing means biasing the pressing portion toward the initial position is disposed below the pressing portion group, that is, the portions of the pressing portion group working integrally with the pressing portion. Typical examples of the biasing means may include a coil spring, a plate spring, etc.

According to the steering apparatus of a further aspect, it is advantageous for enhancing the degree of freedom in arrangement of elements disposed above the pressing portion group. In the structure having an airbag, the range in which the airbag can be folded or the range in which the airbag can be arranged can be widely taken above the pressing portion, so that it is possible to enhance the degree of freedom in arrangement of the airbag.

According to the present invention described above, as for the working of the horn mechanism in the steering apparatus, specifically by constructing to permit the movement of the pressing portion subjected to the pressing operation in the predetermined direction passing through the initial position and the working direction and to regulate the movement of the pressing portion in a direction other than the predetermined direction, it is possible to allow the horn mechanism of the steering apparatus to smoothly work.

Hereinafter, embodiments of the present invention will be described in detail with reference to the drawings.

Fig. 1 is a cross-sectional view illustrating a steering apparatus according to an embodiment in a state where a module cover is not pressed.

Fig. 2 is a cross-sectional view illustrating the steering apparatus of Fig. 1 in a state where the module cover is pressed.

Fig. 3 is a diagram illustrating an entire guide frame of the steering apparatus of Fig. 1.

Fig. 4 is an exploded perspective view illustrating a pivotal connection structure of an arm of the guide frame shown in Fig. 3 to a steering base.

Fig. 5 is a perspective view illustrating a ball joint part of the guide frame shown in Fig. 3.

Fig. 6 is a perspective view illustrating another structural example of an engagement structure of each arm.
(a) of Fig. 7 is a side view illustrating another structural example of restoring means of each arm and (b) thereof is a perspective view illustrating a torsion spring as the restoring means of (a).

Fig. 8 is a perspective view of a steering apparatus according to another embodiment.

Fig. 9 is an exploded perspective view of the steering apparatus shown in Fig. 8.

Fig. 10 is a perspective view illustrating a guide frame of the steering apparatus shown in Fig. 8.

Fig. 11 is a side view of the steering apparatus shown in Fig. 8.

Fig. 12 is a side view of the steering apparatus shown in Fig. 8.

Fig. 13 is a cross-sectional view of a longitudinal portion of an arm schematically illustrating mechanisms of the guide frame of the steering apparatus shown in Fig. 8.

Fig. 14 is a diagram illustrating a sectional structure of a steering apparatus 100 according to an embodiment.

Fig. 15 is a plan view of a link mechanism 129 according to an embodiment.

Fig. 16 is a diagram illustrating a sectional structure of an airbag system 110 and the link mechanism 129 set to an initial position.

Fig. 17 is a diagram illustrating a sectional view of the airbag system 110 and the link mechanism 129 set to a working position where a horn switch 181 is turned "ON".

Fig. 18 is a diagram schematically illustrating a state where the link mechanism 129 is fixed to a moving support plate 118 and a stationery support plate 119 with clips 137 according to an embodiment.

Fig. 19 is a diagram schematically illustrating a state where the airbag system 110 is fixed to a steering wheel 101 with fixing bolts 103.

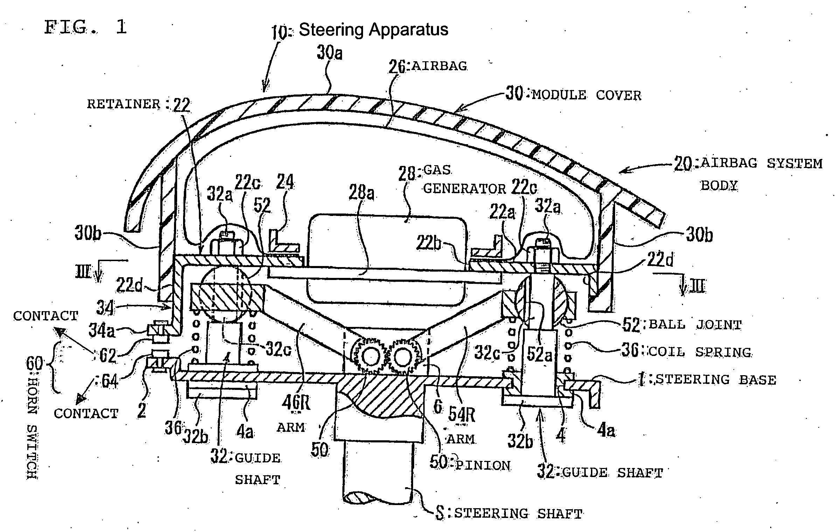

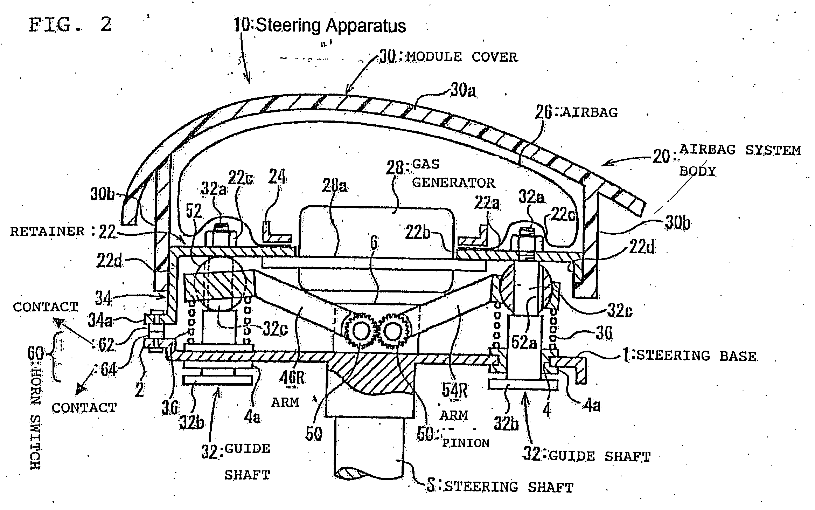

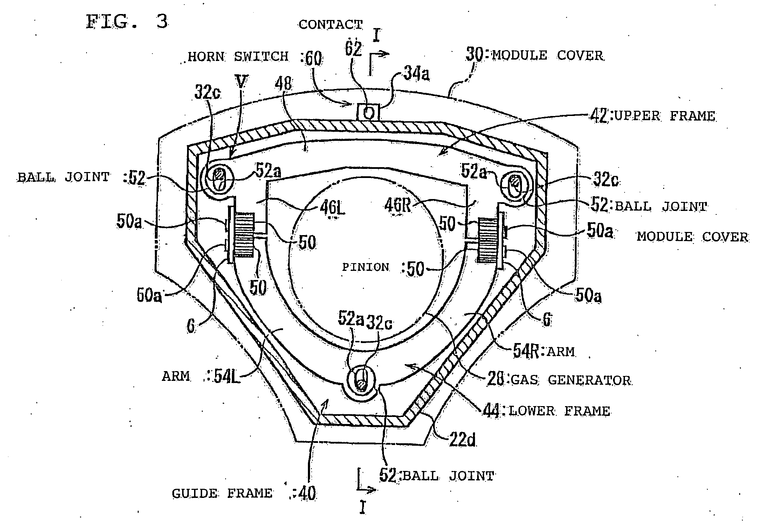

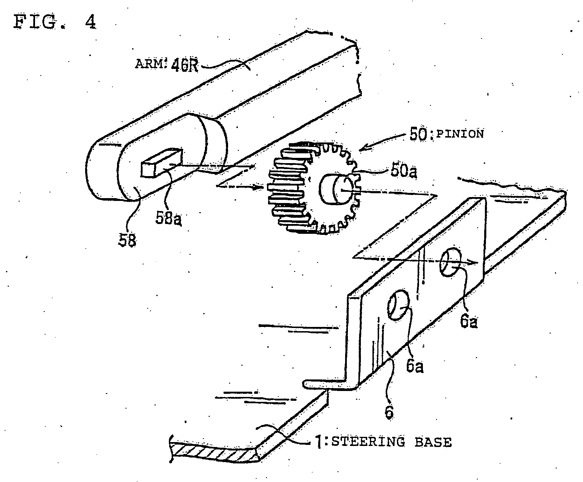

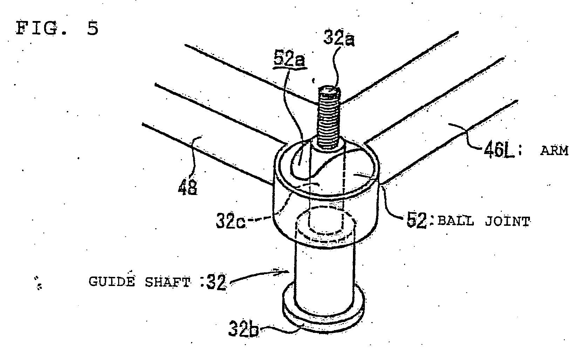

Fig. 1 is a longitudinal cross-sectional view (a cross-sectional view taken along Line I-I of Fig. 3) illustrating a steering apparatus 10 according to an embodiment of the present invention in a state where a module cover is not pressed, Fig. 2 is a longitudinal cross-sectional view illustrating the steering apparatus 10 in a state where the module cover is pressed, Fig. 3 is a diagram (a cross-sectional view taken along Line III-III of Fig. 1) illustrating a whole guide frame of the steering apparatus 10, Fig. 4 is an exploded perspective view illustrating a pivotal connection structure of an arm of the guide frame to a steering wheel, and Fig. 5 is a perspective view illustrating a ball joint part (V part of Fig. 3) of the guide frame shown in Fig. 3. In the following description, a vertical direction means a vertical direction when the steering wheel is seen from a driver' side in a state where the steering wheel is in a steering posture at the time of straight traveling of a vehicle, that is, a vertical direction in Fig. 3.

The steering apparatus 10 comprises a driver airbag system and is provided in a base (steering base) 1 at the center of a steering wheel. The steering base 1 is connected to a front end of a steering shaft S.

The steering apparatus 10 comprises an airbag system body 20 disposed at the front surface side (driver' side) of the steering base 1, a guide frame 40 as guiding means guiding the airbag system body 20 such that the airbag system body is parallel-moved in an extension direction of the steering shaft S (a direction approaching and receding from the steering base 1), and a horn switch 60 which is turned on by guiding the airbag system body 20 to the guide frame 40 and parallel-moving the airbag system body toward the steering base 1. The guide frame 40 is disposed at the rear surface side of the airbag system body 20 (at the downside in Figs. 1 and 2).

The airbag system body 20 comprises a retainer 22, an airbag 26 fitted to the front surface side of the retainer 22 with a fitting ring 24, a gas generator 28 for inflating the airbag 26, and a module cover 30 fitted to the retainer 22 to cover the airbag 26 folded at the front surface side of the retainer 22. The retainer 22 is connected to the steering base 1 through guide shafts 32. The guide shafts 32 permit the retainer 22 (the airbag system body 20) to be moved to approach and recede from the steering base 1.

The retainer 22 has a main panel portion 22a having an approximately flat plate shape, and the main panel portion 22a is provided with a gas-generator inserting port 22b. A gas-generator receiving port (of which a reference numeral is omitted) at the base end of the airbag 26 overlaps on the retainer front surface side of the circumferential edge portion of the gas-generator inserting port 22b, and the fitting ring 24 overlaps thereon.

The front end (gas discharging portion) of the gas generator 28 is inserted into the airbag 26 through the gas-generator inserting port 22b and the gas-generator receiving port. A flange 28a protrudes from the side surface of the gas generator 28, and the flange 28a overlaps on the retainer rear surface of the circumferential edge portion of the gas-generator inserting port 22b.

Bolts (not shown) protrude from the rear surface of the fitting ring 24. The bolts are inserted into bolt inserting holes (not shown) provided at the circumferential edge portions of the gas-generator receiving port and the gas-generator inserting port 22b and the flange 28a, and the airbag 26 and the gas generator 28 are fixed to the retainer 22 by fastening nuts (not shown) to the bolts.

Nuts 22c into which the guide shafts 32 are screw-inserted are fixed to the main panel portion 22a of the retainer 22.

Leg portions 22d are vertically raised toward the backside (the opposite side to the driver's side: the same is true below) from the outer circumferential edge of the main panel portion 22a. The leg portions 22d are formed so as to surround almost all the outer circumferential edge of the retainer 22.

In the present embodiment, a contact retaining piece 34 for retaining one contact 62 of the hom switch 60 protrudes by allowing the leg portions 22d to extend from a horizontal intermediate portion of the upper edge of the retainer 22 to the backside. The front end of the contact retaining piece 34 is bent in an L-shape and forms an opposing piece 34a extending in a direction (upward in Fig. 3) intersecting the extension direction of the steering shaft S. The contact 62 is attached to the opposing piece 34a.

An opposing piece 2 extending in the same direction as the opposing piece 34a protrudes from a horizontal intermediate portion of the upper edge of the steering base 1 to oppose the opposing piece 34a. The other contact 64 of the horn switch 60 is attached to the opposing piece 2. When the retainer 22 (the airbag system body 20) approaches the steering base 1, the opposing pieces 34a and 2 overlap each other and the contacts 62 and 64 come into contact with each other, thereby turning on the horn switch 60.

One contact 62 of the horn switch 60 is electrically connected to a positive side of a battery through the retainer 22, and the other contact 64 is electrically connected to a negative side through the steering base 1 and a vehicle body.

The module cover 30 has a main surface portion 30a opposing a driver and a leg portion 30b rising downwardly from the rear surface side of the main surface portion 30a. The leg portion 30b has a wall shape surrounding the retainer 22. The leg portion 30b overlaps on the side surface of the leg portion 22b of the retainer 22, and is fixed thereto with a fixing mechanism such as a rivet.

A tearaway line (not shown) having a groove shape is provided at the rear surface side of the main surface portion 30a, and when the airbag 26 is inflated, the main surface portion 30a is cleaved along the tearaway line with the inflating pressure of the airbag 26.

The guide shafts 32 have an approximately cylindrical shape, one end (front end) thereof is provided with a male screw portion 32a, and a flange 32b as a stopper protrudes radially from the other end (rear end) thereof. The portion ranging from an intermediate position in the axis direction of the guide shaft 32 to the base of the male screw portion 32a includes a ball-joint retaining portion 32c inserted into the guide-shaft inserting hole 52a for the ball joint 52 to be described later. The ball-joint retaining portion 32c has a diameter smaller than that of the portion ranging from the intermediate position in the axis direction of the guide shaft 32 to the flange 32b and larger than that of the male screw portion 32a. The length of the ball-joint retaining portion 32c is equal to or slightly greater than the diameter of the ball joint 52.

The guide shafts 32 are fixed to the main panel portion 22a of the retainer 22 by screw-inserting the male screw portion 32a into the nut 22c, and extend to the back side from the main panel portion 22a. The rear end (the portion between the ball-joint retaining portion 32c and the flange 32b) of the guide shaft 32 is inserted into the guide-shaft inserting hole 4 provided in the steering base 1. Reference numeral 4a denotes a collar fitted to the guide-shaft inserting hole 4. As the retainer 22 (the airbag system body 20) approaches and recedes from the steering base 1, the rear end of the guide shaft 32 moves head and recedes in the axis direction in the guide-shaft inserting hole 4.

In the present embodiment, the guide shafts 32 are provided at a total of three positions of both horizontal sides of the upper portion of the retainer 22 and a horizontal intermediate side of the lower portion of the retainer.

A coil spring 36 biasing the retainer 22 (the airbag system body 20) to recede from the steering base 1 is externally inserted into the respective guide shafts 32.

In the present embodiment, the guide frame 40 has an upper frame 42 supporting the upper portion of the retainer 22 and a lower frame 44 supporting the lower portion of the retainer.

As shown in Fig. 3, the upper frame 42 comprises a pair of arms 46L and 46R extending approximately in an up-and-down direction, a bridge portion 48 extending in a left-and-right direction to bridge the upper ends of the arms 46L and 46R, pinions (gears) 50 and 50 fixed to the lower ends (front ends) of the arms 46L and 46R, and ball joints (a spherical joint which can rotate in all directions) 52 and 52 provided at the upper ends (both ends of the bridge portion 48) of the respective arms 46L and 46R.

The lower frame 44 comprises a pair of arms 54L and 54R extending approximately in the up-and-down direction and curved such that the lower ends approach each other, thereby forming one line, pinions 50 and 50 fixed to the upper ends (front ends) of the respective arms 54L and 54R, and a ball joint 52 provided at the center of the extension direction of one line of arms 54L and 54R.

As shown in Fig. 4, the pinion 50 is fixed to the front end of each arm 46L, 46R, 54L, and 54R (only the arm 46R is shown in Fig. 4) by setting the axis direction as the left-and-right direction.

As shown in the figure, in the present embodiment, a notched concave end surface 58 is formed on an outward surface (an opposite surface of the opposing surfaces between the arms 46L and 46R and between the arms 54L and 54R) of the front end of each arm 46L, 46R, 54L, and 54R. A protrusion 58a having a rectangular rod shape protrudes from the concave end surface 58, and the surface of the pinion 50 opposing the concave end surface 58 is provided with a rectangular hole (not shown) with which the protrusion 58a is locked. By locking the protrusions 58a with the rectangular holes, the pinions 50 are non-rotatably fixed to the arms 46L, 46R, 54L, and 54R. The pinions 50 may be coupled to the respective arms with an adhesive as needed.

As shown in Fig. 4, a rotation axis 50a protrudes from the opposite end surface of the surface opposing the concave end surface 58 of each pinion 50.

As shown in Fig. 3, in the upper frame 42 and the lower frame 44, the pinions 50 and 50 at the front ends of the left arms 46L and 54L are engaged with each other, and the pinions 50 and 50 at the front ends of the right arms 46R and 54R are engaged with each other.

Retaining pieces 6 rotatably retaining the pinions 50 and 50 engaged with each other are raised from the lateral edges of the steering base 1. Each retaining piece 6 is provided with two through holes 6a and 6a at an interval equal to the gap between the rotation axes 50a and 50a of the pinions 50 and 50 engaged with each other, and the rotation axes 50a and 50a of the pinions 50 and 50 engaged with each other are inserted into the through holes 6a and 6a.

As a result, the arms 46L, 46R, 54L, and 54R are fixed to the steering base 1 through the pinions 50 and the retaining pieces 6 so as to rotate about the rotation axis 50a of each front end. Since the pinions 50 and 50 are engaged with each other, The left arms 46L and 54L opposing each other and the right arms 46R and 54R opposing each other are interlocked with each other and rotate such that the ball joints 52 approach and recede from the steering base 1.

The respective ball joints 52 are provide with the guide-shaft inserting holes 52a into which the ball-joint retaining portions 32c of the guide shafts 32 are inserted. By inserting the ball joints 52 into the ball-joint retaining portions 32c of the guide shafts 32 through the guide-shaft inserting holes 52a, the upper ends of the arms 46L and 46R of the upper frame 42 are rotatably connected to the rear surface of the upper portion of the retainer 22, and the lower ends of the arms 54L and 54R of the lower frame 44 are rotatably connected to the rear surface of the lower portion of the retainer 22. The front ends of the coil springs 36 externally inserted into the guide shafts 32 come into contact with the arms 46L, 46R, 54L, and 54R, and the rear ends thereof come into contact with the collar 4a.

Each guide-shaft inserting hole 52a has an opening with a vertically-longitudinal long hole shape, as shown in Figs. 3 and 5, and the ball-joint retaining portion 32c of each guide shaft 32 can be relatively moved in the guide-shaft inserting hole 52a in the up-and-down direction (in the direction intersecting the axis direction of the guide shaft 32).

In the steering apparatus 10 with the aforementioned structure, when the module cover 30 is pressed toward the steering wheel, as shown in Fig. 2, the airbag system body 20 approaches the steering base 1 and the contacts 62 and 64 come into contact with each other, thereby ringing the horn. At this time, the arms 46L, 46R, 54L, and 54R of the upper frame 42 and the lower frame 44 supporting the retainer 22 of the airbag system body 20 rotate toward the steering base 1 about the rotation axis 50a while compressing the coil springs 36 with the movement of the retainer 22.

When a hand is separated from the module cover 30, the arms 46L, 46R, 54L, and 54R and the airbag system body 20 are restored to the state shown in Fig. 1 due to the biasing force of the coil springs 36, and the contacts 62 and 64 recede from each other, so that the ringing of the horn stops.

The vertical displacements (deviation of the ball joints 52 from the guide shafts 32) of the ball joints 52 due to the rotation of the arms 46L, 46R, 54L, and 54R are absorbed by the vertical relative movement of the ball-joint retaining portions 32c of the guide shafts 32 within the guide-shaft inserting holes 52a of a long opening shape in the ball joints.

In the steering apparatus 10, since the left arms 46L and 54L and the right arms 46R and 54R of the upper frame 42 and the lower frame 44 rotate through the pinions 50 and 50 interlocking with each other, respectively, the retainer 22 (the airbag system body 20) of which the upper portion and the lower portion are supported by the arms 46L, 46R, 54L, and 54R is always parallel-moved toward the steering base 1, for example, even when the outer edge portions other than the center of the module cover 30 are pressed. As a result, the coil springs 36 biasing the airbag system body 20 are all uniformly compressed. Therefore, even if any position of the module cover 30 is pressed, the reactive force applied to the finger tip of an operator (driver) is always constant.

In the steering apparatus 10, since the guide frame 40 as the guiding means guiding the movement of the airbag system body 20 is disposed at the rear surface side of the airbag system body 20, the steering diameter-direction size of the center of the steering wheel can be reduced and made relatively small.

In the aforementioned embodiment, the pinions 50 and the arms 46L, 46R; 54L, and 54R are individually provided, but may be integrally provided. In the present invention, an engagement structure other than the pinion (gear) may be employed.

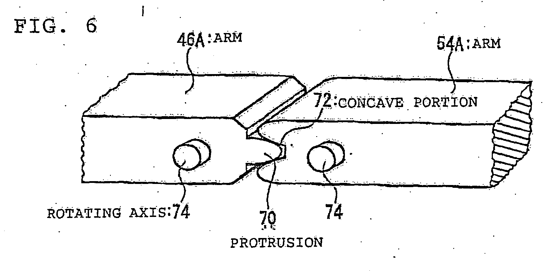

Fig. 6 is a perspective view illustrating another example of the engagement structure between the arms.

In Fig. 6, a protrusion 70 as a protruding portion extending from the front end of one arm 46A to the other arm 54A is provided, and the front end of the other arm 54A is provided with a concave portion 72 as a locking portion locked with the protrusion 70. The arms 46A and 54A rotate while interlocking or engaging with each other by locking the protrusion 70 with the concave portion 72. In the present embodiment, a rotation axis 74 protrudes from the side surface of each arm 46A and 54A. By inserting the rotation axes 74 into the through holes of retaining pieces 6 (not shown in Fig. 6), the arms 46A and 54A are rotatably fixed to the steering base 1.

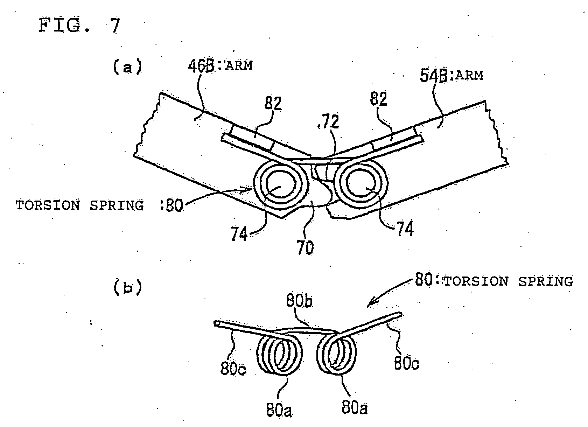

in the aforementioned embodiment corresponding to Figs. 1 to 5, the airbag system body 20 and the arms 46L, 46R, 54L, and 54R are biased in a restoring direction by the coil springs 36 externally inserted to the guide shafts 32, but the biasing structure of the airbag system body and the arms in the restoring direction is not limited to this. For example, in Fig. 7, the arms 46B and 54B are biased in the restoring direction by a torsion spring 80 wound on the rotation axes 74 of the arms 46B and 54B.

The torsion spring 80 has a pair of coil portions (wound portions) 80a and 80a, a bridge portion 80b connecting the coil portions 80a and 80a, and stretched portions 80c and 80c stretched in the opposite direction from the respective coil portions 80a. The respective coil portions 80a are fitted to and retained by the rotation axis 74 of the respective arms 46B and 54B, and the respective stretched portions 80c abut a spring contacting piece 82 provided in the respective arms 46B and 54B.

In the present embodiment, the arms 46B and 54B rotate (are restored) with the upward biasing force from the torsion spring 80 through the spring contact pieces 82. The other structures of the arms 46B and 54B are similar to Fig. 6, and the same reference numerals in Fig. 7 as Fig. 6 denote the same elements.

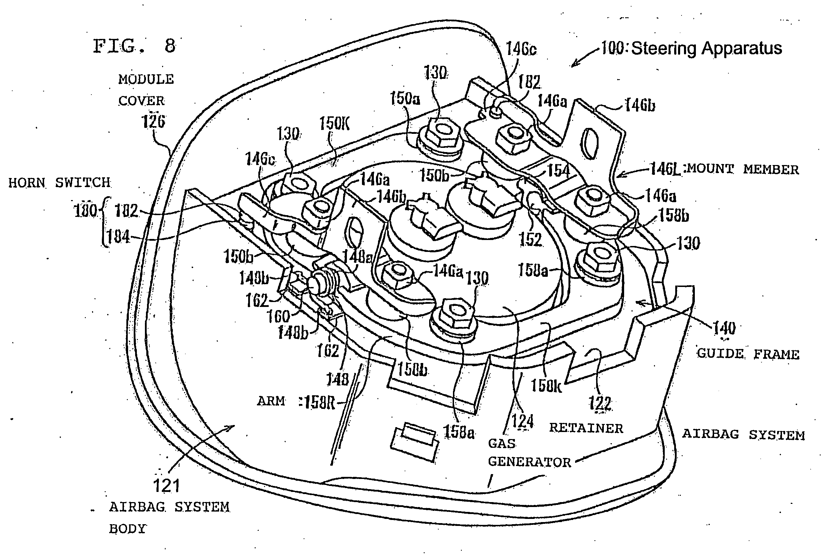

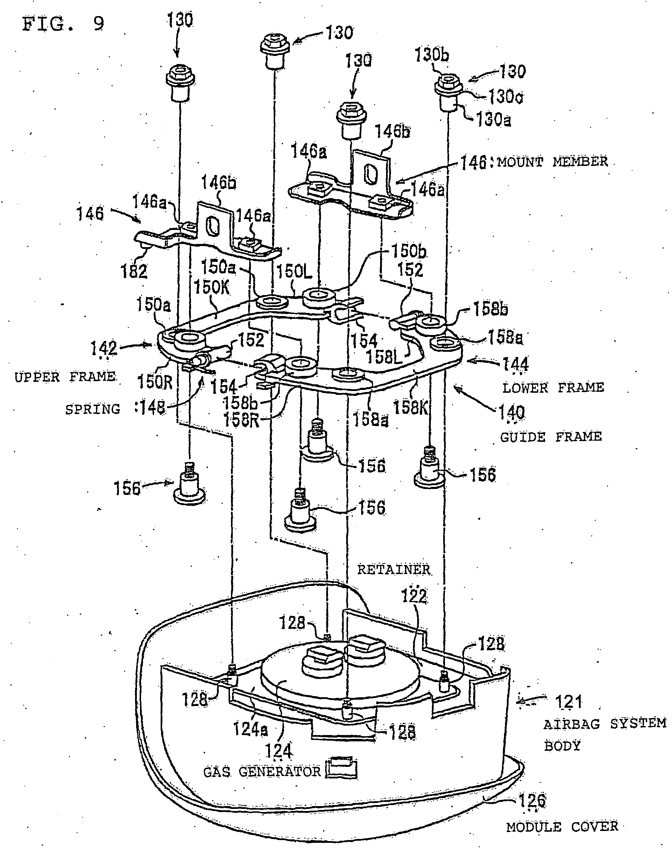

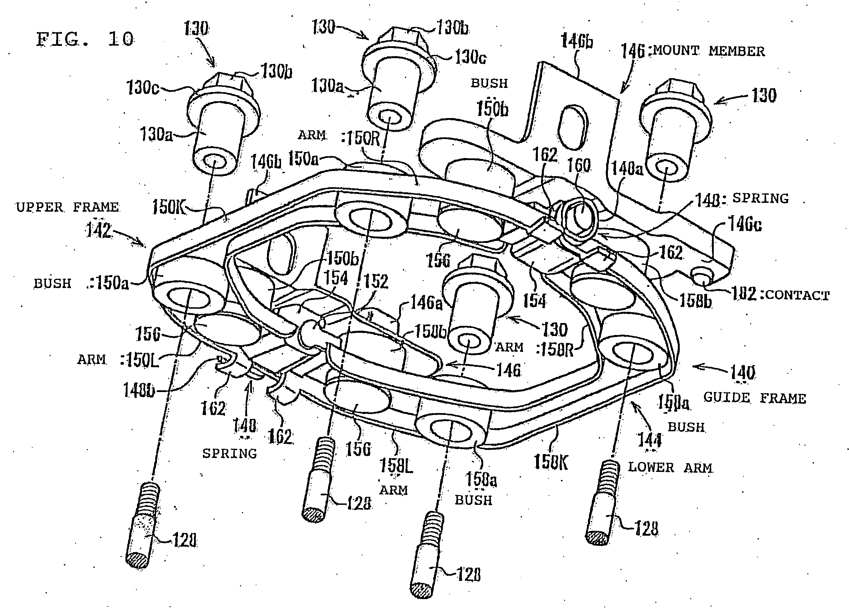

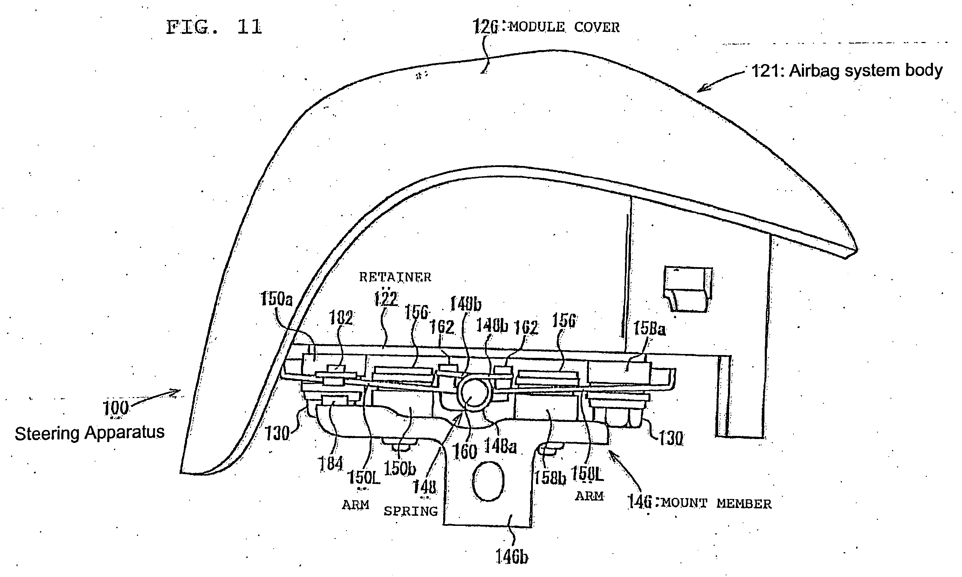

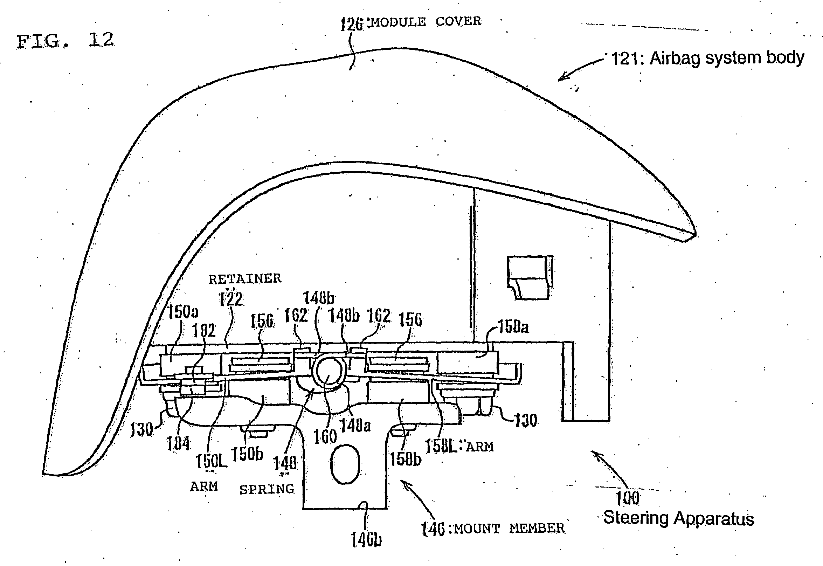

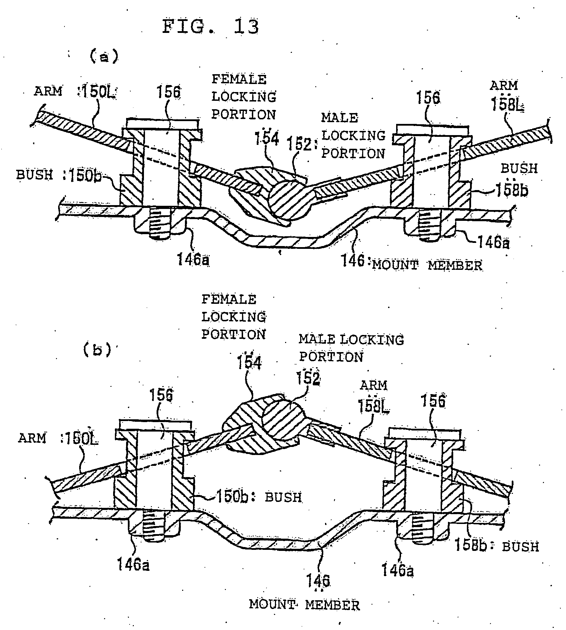

Fig. 8 is a perspective view of the rear surface side (the guide frame side) of a steering apparatus 100 according to another embodiment, Fig. 9 is an exploded perspective view of the steering apparatus 100, Fig. 10 is a perspective view of the guide frame of the steering apparatus 100, Figs. 11 and 12 are side views of the steering apparatus100, and Figs. 13(a) and 13(b) are cross-sectional views of a longitudinal portion of the arm schematically illustrating mechanisms of the guide frame of the steering apparatus 100. Figs. 11 and 13(a) illustrate a state where the module cover is not pressed, and Figs. 12 and 13(b) show a state where the module cover is pressed.

In the present embodiment, the steering apparatus 100 also comprises an airbag system body 121 disposed at the front surface side (driver side) of the steering base (not shown), a guide frame 140 as guiding means guiding the airbag system body 121 such that the airbag system body is parallel-moved in an extension direction (a direction approaching and receding from the steering base) of the steering shaft (not shown), and a horn switch 180 which is turned on by guiding the airbag system body 121 to the guide frame 140 and parallel-moving the airbag system body toward the steering base. The guide frame 140 is disposed at the rear surface side (between the airbag system body 121 and the steering base) of the retainer 122 of the airbag system body 121.

Similarly to the airbag system body 20 shown in Figs. 1 and 2, the airbag system body 121 also comprises a retainer 122, an airbag (not shown) fitted to the front surface side of the retainer 122 with a fitting ring (not shown), a gas generator (inflator) 124 for inflating the airbag, and a module cover 126 fitted to the front surface side of the retainer 122 to cover the airbag folded at the front surface side of the retainer 122.

Although not shown, in the airbag system body 121, a gas-generator receiving port at the base end of the airbag overlaps on the retainer front surface side of the circumferential edge portion of the gas-generator inserting port provided in the main panel portion (not shown) of the retainer 122, and the fitting ring overlaps thereon.

The front end (gas discharging portion) of the gas generator 124 is inserted into the airbag through the gas-generator inserting port and the gas-generator receiving port, and a flange 124 protruding from the side surface of the gas generator 124 overlaps on the retainer rear surface side of the circumferential edge portion of the gas-generator inserting port.

Bolts 128 protruding from the rear surface of the fitting ring 24 are inserted into bolt inserting holes (not shown) provided at the circumferential edge portions of the gas-generator receiving port and the gas-generator inserting port and the flange 124, and are stretched to the rear surface side of the retainer 122.

As shown in Fig. 9, the bolts 128 are disposed at the left side and right side (which correspond to the left-and-right direction when the steering apparatus 100 is seen from the driver's side. The same is true of the following description) of the upper portion of the retainer 122 and at the left side and the right side of the lower portion, respectively.

In the present embodiment, by fastening flange nuts 130 having a collar to the bolts 128 through the guide frame 140, the airbag and the gas generator 124 are fixed to the retainer 122.

Each flange nut 130 having the collar comprises a tubular collar portion 130a, a nut portion 130b provided at one end in the axis direction of the collar portion 130a, and a flange portion 130c which is formed between the collar portion 130a and the nut portion 130b and extends radially from the outer circumferential surface of the collar portion 130a. When the flange nut 130 having the collar is fastened to the bolt 128, the collar portion 130a is externally inserted into the base end of the bolt 128 and the nut portion 130b is screw-coupled to the front end of the bolt 128.

The guide frame 140 comprises an upper frame 142 connected to the left and right bolts 128 on the retainer through the flange nuts 130 having the collar, a lower frame 144 connected to the left and right bolts 128 under the retainer through the flange nuts 130 having the collar, and a pair of mount members 146L and 146R for connecting the upper frame 142 and the lower frame 144 to the steering base to rotate in the steering axis direction, and springs 148 as the biasing means biasing the upper frame 142 and the lower frame 144 in the direction in which the retainer 122 recedes from the steering base.

The upper frame 142 has a pair of arms 150L and 150R extending approximately in the up-and-down direction, a bridge portion 150K bridging the upper ends of the arms 150L and 150R, and a male locking portion 152 and a female locking portion 154 provided at the lower ends of the arms 150L and 150R. The specific structure of the male locking portion 152 and the female locking portion 154 will be described later.

The upper end of the respective arms 150L and 150R is provided with an opening (not shown) into which the left and right bolts 128 (that is, the collar portions 130a externally inserted into the bolts 128) on the retainer are inserted, and the lower end (front end) thereof is provided with an opening (of which a reference numeral is omitted. See Fig. 11) into which a shoulder bolt 156 for connecting the respective arms 150L and 150R to the mount members 146L and 146L, respectively, is inserted.

In the shoulder bolt 156, one end (front end) thereof is provided with a male screw portion (of which a reference numeral is omitted), a portion subsequent to the male screw portion forms an axial portion (of which a reference numeral is omitted) inserted into the opening, and the other end (rear end) thereof is provided with a flange portion (of which a reference numeral is omitted) extending radially from the outer circumferential surface of the axial portion.

The opening at the upper end of the respective arms 150L and 150R is fitted with a bush 150a externally inserted into the collar portion 130a, and the opening at the lower end is fitted with a bush 150b externally inserted into the axial portion of the shoulder bolt 156. The bushes 150a and 150b may be made of rubber to permit the respective arms 150L and 150R to be moved (rotate) relative to the bolts 128 and the shoulder bolt 156, or may be fitted with a movable allowance relative to the openings.

The lower frame 144 has a pair of arms 158L and 158R extending approximately in the up-and-down direction, a bridge portion 158K bridging the upper ends of the arms 158L and 158R, and a male locking portion 152 and a female locking portion 154 provided at the upper ends of the arms 158L and 158R.

The upper end of the respective arms 158L and 158R is provided with an opening (not shown) into which the left and right bolts 128 (that is, the collar portions 130a under the retainer) are inserted, and the upper end (front end) thereof is provided with an opening (of which a reference numeral is omitted. See Fig. 11) into which a shoulder bolt 156 is inserted.

Also in the lower frame 144, the opening at the lower end of the respective arms 158L and 158R is fitted with a bush 158a externally inserted into the collar portion 130a, and the opening at the upper end is fitted with a bush 158b externally inserted into the axial portion of the shoulder bolt 158. The bushes 158a and 158b may be made of rubber, or may be fitted with a movable allowance relative to the openings.

In the present embodiment, the male locking portion 152 is a member having and approximately cylindrical shape and the female locking portion 154 is a member which has an approximately C-shaped sectional shape and which can be slidably externally inserted into the outer circumference surface of the male locking portion 152, as shown in Figs. 13(a) and 13(b). The male locking portion 152 and the female locking portion 154 are fixed to the front ends of the arms 150L, 150R, 158L, and 158R (hereinafter, abbreviated as arms 150L to 158R).

In the present embodiment, the left arm 150L of the upper frame 142 and the right arm 158R of the lower frame 144 are provided with the male locking portion 152, and the right arm 150R of the upper frame 142 and the left arm 158L of the lower frame 144 are provided with the female locking portion 154.

As shown in Figs. 9 and 10, the upper frame 142 and the lower frame 144 are disposed such that the front ends of the left arms 150L and 158L are opposed to each other and the front ends of the right arms 150R and the 158R are opposed to each other. Then, the male locking portion 152 and the female locking portion 154 of the left arms 150L and 158L are locked with each other, and the male locking portion 152 and the female locking portion 154 of the right arms 150R and 158R are locked with each other.

The mount members 146L and 146R are disposed at the left arms 150L and 158L locked with each other and at the right arms 150R and 158R locked with each other, respectively. A pair of nuts 146a and 146a are fixed to the mount members 146L and 146R, and the shoulder bolts 156 are inserted into the bushes 150b and 158b of the arms 150L to 158R, so that the respective arms 150L to 158R are connected to the mount members 146L and 146R, by screw-inserting the shoulder bolts 156 into the nuts 146a.

The bushes 150b and 158b are externally inserted into the axial portions of the shoulder bolts 156 and are retained between the flange portion at the rear end of the axial portion and the plate planes of the mount members 146L and 146R.

The respective mount members 146L and 146R are provided with a bracket 146b for connection to the steering base and a contact retaining piece 146c to which one contact 182 of the horn switch 180 is attached. The other contact 184 of the horn switch 180 is attached to a portion of the retainer 122 opposing the contact retaining piece 146c.

In the present embodiment, the spring 148 has a wound portion 148a in a coil shape and a pair of stretched portions 148b and 148b stretched from the wound portion 148a in the direction in which the stretched portions recede from each other.

In the present embodiment, spring retaining protrusions 160 are provided to the left and right male locking portions 152, respectively. The spring retaining protrusion 160 is an axial protrusion protruding coaxially with the male locking portion 152 from the end surface at one end side (the opposite surface side of the opposing surfaces of the left and right arms. Hereinafter, referred to as an outward surface side of an arm) in the axial direction of the male locking portion 152. The wound portion 148a of the spring 148 is fitted to the spring retaining protrusion 160. Stretched-portion locking pieces 162 protrude from the outward surfaces of the arms 150L to 158R, and the stretched portions 148b and 148b stretched from the wound portion 148a are locked to the stretched-portion locking pieces 162.

The guide frame 140 is connected to the airbag system body 121 by inserting the left and right bolts 128 on the retainer into the bushes 150a at the upper end of the arms 150L and 150R, inserting the left and right bolts 128 under the retainer into the bushes 158a at the lower end of the arms 158L and 158R, and fastening the flange nuts 130 having a collar to the bolts 128.

At the time of fastening the flange nuts 130 having a collar to the bolts 128, the collar portions 130a are externally inserted into the bolts 128 while inserting the collar portions 130a into the bushes 150a and 158a, and the nut portions 130b are screw-fitted to the front ends of the bolts 128. The bushes 150a and 158b externally inserted into the collar portions 130a are retained between the flange portions 130c at the rear end of the collar portion 130a and the plate surface of the retainer 122.

The steering apparatus 100 having the aforementioned structure is fitted to the steering wheel, by fixing the brackets 146b of the respective mount members 146L and 146R to the steering base with bolts.

Next, operation of the steering apparatus 100 will be described.

In the steering apparatus 100, when the module cover 126 is pressed toward the steering wheel, as shown in Figs. 12 and 13(b), the airbag system body 121 approaches the mount members 146 (steering base), and the contacts 182 and 184 of the horn switch 180 come into contact with each other, so that a horn rings.

At this time, the upper ends of the arms 150L and 150R of the upper frame 142 supporting the retainer 122 of the airbag system body 121 rotate toward the steering base about the bushes 150b, and the lower ends of the arms 158L and 158R of the lower frame 144 rotate toward the steering base about the bushes 158b. Since the lower ends of the arms 150L and 150R and the upper ends of the arms 158L and 158R are locked to each other through the male locking portions 152 and the female locking portions 154, the arms 150L and 150R and the arms 158L and 158R rotate while interlocking with each other.

When a hand is separated from the module cover 126, the arms 150L to 158R rotate by means of the biasing force of the spring 148 such that the airbag system body 121 recedes from the steering base, is restored to the state shown in Figs. 11 and 13(a), and the contacts 182 and 184 are separated, so that the ringing of the horn stops.

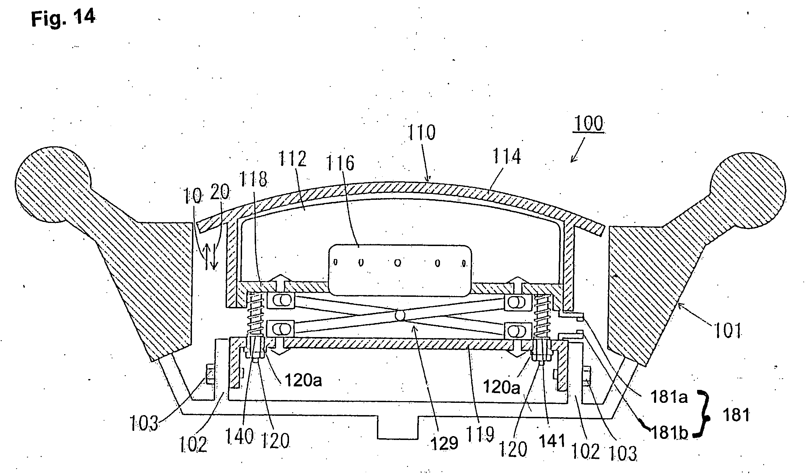

In this steering apparatus 100, since the left arms 150L and 158L and the right arms 150R and 158R of the upper frame 142 and the lower frame 144 rotate while interlocking with each other, respectively, the retainer 122 by which the arms 150L to 158R are supported is always parallel-moved toward the steering base, for example, even when an outer edge portion of the module cover 126 is pressed, not a center portion thereof. As a result, even if any position of the module cover 126 is pressed, the reactive force applied to a finger tip of an operator (driver) is constant.
Referring to Fig. 14, a further structure of a steering apparatus 100 for an automobile according to an embodiment of the present invention will be described. A sectional structure of the steering apparatus 100 according to the present embodiment is shown in Fig. 14.

As shown in Fig. 14, the steering apparatus 100 comprises a steering wheel 101 used for a rider to steer a vehicle, an airbag system 110 fitted to the steering wheel 101, a moving support plate 118 and a stationary support plate 119 disposed to oppose each other, a link mechanism 129 provided between the moving support plate 118 and the stationery support plate 119, and a hom switch 181 as major elements. The steering apparatus 100 constitutes "a steering apparatus" according to the present invention, "an airbag system according to Modifications 1 to 6 to be described later, and "a horn switch apparatus" according to Modifications 7 to 13.

The airbag system 110 comprises an airbag 112 received in the airbag system 110 in a state where the airbag is folded in advance in a predetermined shape, a module cover (airbag cover) 114 covering a rider side of the airbag 112, and an inflator 116 supplying unfolding and expanding gas to the airbag 112. When the inflator 116 works and the unfolding and expanding gas is supplied to the airbag 112 at the time of collision of a vehicle, the airbag 112 is a member which is unfolded and expanded toward a rider protecting area while cleaving the module cover 114 along a tearaway line (not shown), and corresponds to the "airbag" of the present invention. The inflator 116 corresponds to the "gas supply means" of the present invention. The module cover 114 of the present embodiment is a portion which houses the airbag 112 and which is pressed by a rider, and corresponds to the "pressing portion" of the present invention and the "airbag housing portion" of Modification 1 to be described.

The moving support plate 118 is disposed adjacent to the airbag system 110 and supports the lower portion of the airbag system 110. Therefore, the moving support plate 118 is moved with movement of the airbag system 110 when the module cover 114 is pressed. The moving support plate 118 is provided with guide bolts 120 and a first switch contact 181 a constituting a horn switch 181 to be described later.

The guide bolts 120 are protruded from the moving support plate 118 as a base end thereof toward the stationery support plate 119 as a front end thereof, and coil springs 141 are provided around the guide bolts 120. The coil spring 141 has a function of applying an elastic biasing force in a direction in which the moving support plate 118 recedes from the stationery support plate 119. In other words, the coil springs 141 are means for elastically biasing the module cover 114 of the airbag system 110 toward the initial position, and constitute the "biasing means" of the present invention. In the present embodiment, the coil springs 141 are disposed below a portion (the moving support plate 118 in Fig. 14) moving integrally with the module cover 114 as the pressing portion. This arrangement of the coil springs 141 corresponds to the structure where "the biasing means (coil springs 141) is disposed below the pressing portion group (the moving support plate 118)".

In the guide bolts 120, a front end thereof is inserted into an inserting hole of the stationery support plate 119 and the front end is locked to the stationery support plate 119, in a state where the guide bolts are elastically biased by the coil springs 141. An insulating member 120a made of a resin material is interposed between the guide bolt 120 and the inserting hole of the stationery support plate 119.

The stationery support plate 119 is fixed to a bracket 102 of the steering wheel 101 (which corresponds to the "steering wheel" of the present invention) with fixing bolts 103. As a result, the airbag system 110 is fitted to the steering wheel 101. The airbag system 110 is supported by the stationery support plate 119 from the downside in a state where the airbag system is fitted to the steering wheel 101. The stationery support plate 119 is provided with a second switch contact 181b constituting the horn switch 181 to be described later. The stationery support plate 119 is a stationery member relative to the airbag system 110 and corresponds to the "base portion" of the present invention.

The horn switch 181 comprises the first switch contact 181 a provided in the moving support plate 118 and the second switch contact 181b provided in the stationery support plate 119. The moving support plate 118 is moved toward the stationery support plate 119 and the first switch contact 181a as a moving contact comes in contact with the second switch contact 181b as a stationery contact, so that both switch contacts 181a and 181b are electrically connected to each other. As a result, the horn switch 181 is turned on and the horn (klaxon) rings. On the contrary, when the contacting state between the first switch contact 181a and the second switch contact 181b is released, the horn switch 181 is turned off.

The link mechanism 129 has a function of permitting the movement of the moving support plate 118 in a vertical direction, that is, in the direction indicated by the arrow 10 or the arrow 20 in Fig. 14 and regulating the movement of the moving support plate 118 in a direction other than the vertical direction. The directions indicated by the arrows 10 and 20 is a direction corresponding to a direction passing through the initial position and the working position of the airbag system 110, and corresponds to the "predetermined direction" of the present invention. The link mechanism 129 has a function of defining the movement direction of the airbag system 110, that is, a function as a stabilizer controlling the movement direction of the airbag system 110, and the link mechanism 129 constitutes the "movement-direction defining means" of the present invention. The "regulation" by the link mechanism 129 includes a case where the movement in a direction other than the direction indicated by the arrow 10 or 20 is slightly permitted for the reason in assembling, as well as a case where the movement is completely regulated.

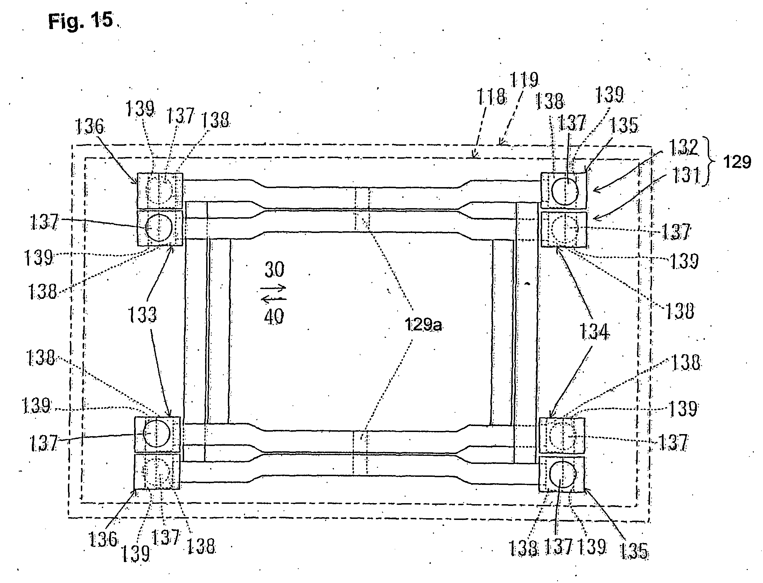

Now, the detailed structure of the link mechanism 129 will be described with reference to Fig. 15. A plan view of the link mechanism 129 according to the present embodiment is shown in Fig. 15.

As shown in Fig. 15, the link mechanism 129 comprises two link frames 131 and 132 which can rotate about a rotating shaft 129a. The link frames 131 and 132 are all longitudinal rectangular frames, and are connected to each other through the rotating shaft 129a to form an approximately X-shaped structure as seen from the sides. The link frames 131 and 132 correspond to the "link frame" of the present invention.

The first link frame 131 includes two upper bearing portions 133 provided correspondingly to the upper end thereof, and two lower bearing portions 134 provided correspondingly to the lower end. In the present embodiment, the respective upper bearing portions 133 and the respective lower bearing portions 134 made of resin are integrally provided with a resin clip 137. The respective upper bearing portions 133 are fixedly attached to the moving support plate 118 (the module cover 114 as a moving group) through the clip 137, and the respective lower bearing portions 134 are fixedly attached to the stationery support plate 119 (the base portion group) through the clip 137.

Similarly, the second link frame 132 includes two upper bearing portions 135 provided correspondingly to the upper end thereof, and two lower bearing portions 136 provided correspondingly to the lower end thereof. In the present embodiment, the respective upper bearing portions 135 and the respective lower bearing portions 136 made of resin are integrally provided with a resin clip 137. The respective upper bearing portions 135 are fixedly attached to the moving support plate 118 (the module cover 114 as a moving group) through the clip 137, and the respective lower bearing portions 136 are fixedly attached to the stationery support plate 119 (the base portion group) through the clip 137.

Four ends of the link frames 131 and 132 are provided with a slide shaft 138 and a long hole 139 engaging with the slide shaft 138 is formed in the respective bearing portions 133, 134, 135, and 136. The long holes 139 are longitudinal holes linearly extending in a direction perpendicular to the direction (the predetermined direction) indicated by the arrows 10 and 20, that is, in a direction (the horizontal direction) indicated by the arrows 30 and 40 in Fig. 15, and correspond to the "long hole" of the present invention. The slide shaft 138 is a member capable of sliding along the long hole 139 in the horizontal direction, and corresponds to the "locking portion" of the present invention.

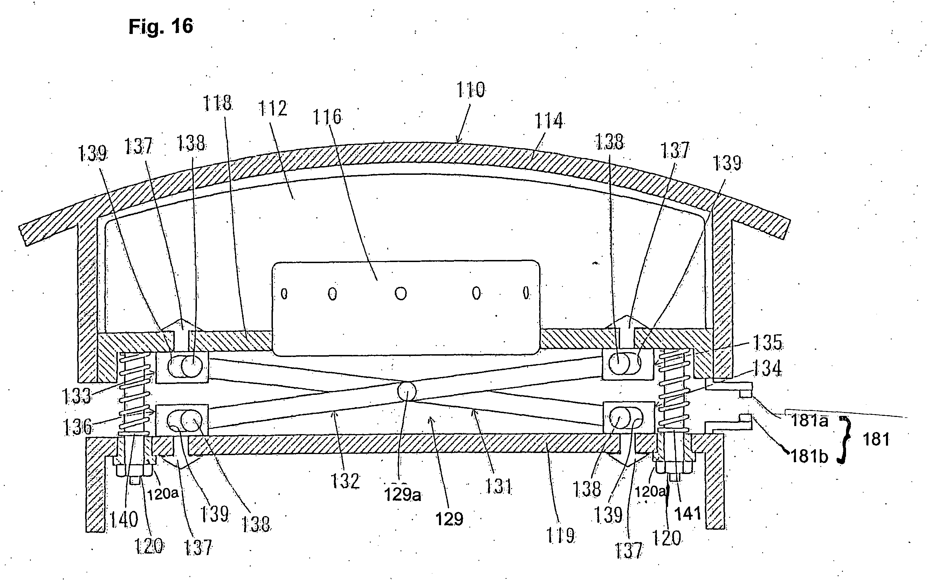

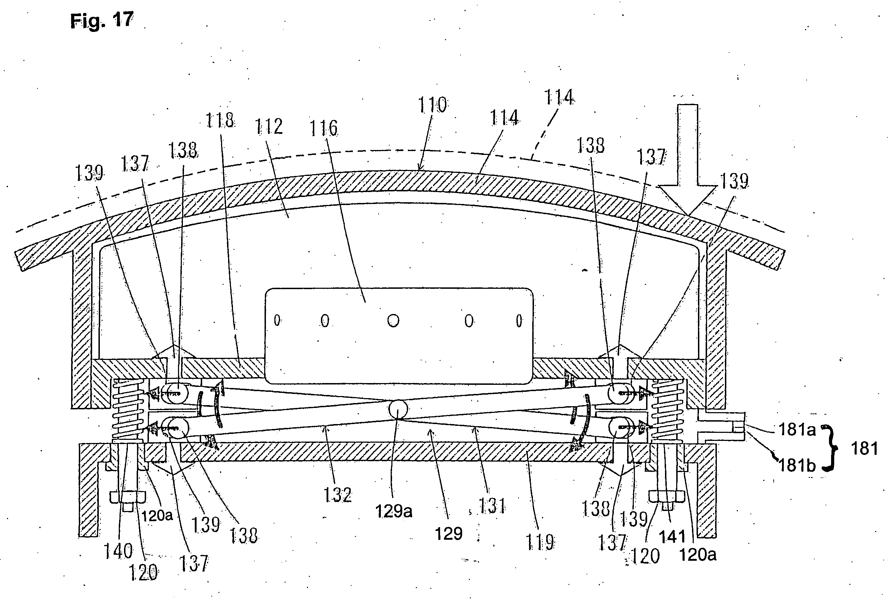

Next, actions of the airbag system 110 and the link mechanism 129 described above will be described with reference to Figs. 16 and 17. Here, the sectional structures of the airbag system 110 and the link mechanism 129 which are set to the initial position are shown in Fig. 16, and the sectional structures of the airbag system 110 and the link mechanism 129 which are set to the working position where the horn switch 181 is turned on are shown in Fig. 17. The steering wheel 101 is omitted in Figs. 16 and 17 for the purpose of convenience.

In an initial state before the module cover 114 of the airbag system 110 is pressed by a rider, the airbag system 110 and the link mechanism 129 are set to the initial position shown in Fig. 16 (which corresponds to the "initial position" of the present invention). At this initial position, the slide shafts 138 of the link frames 131 and 132 come in contact with the insides of the long holes 139 of the bearing portions 133, 134, 135, and 136, and the front ends (the lower side in Fig. 16) of the guide bolts 120 penetrating the stationery support plate 119 are locked to the stationery support plate 119, thereby preventing the moving support plate 118 and the stationery support plate 119 from receding from each other. As a result, at the initial position, the moving support plate 118 and the stationery support plate 119 maintain a predetermined gap in a state where they are elastically biased in the receding direction by the coil springs 141.

When a rider presses the top surface of the module cover 114 of the airbag system 110 which is in the initial state to ring the horn, as shown in Fig. 17, the whole airbag system 110 is moved from the initial position (the position indicated by a two-dotted dashed line in the figure) to the working position (the position indicated by the solid line in the figure and corresponding to the "working position" of the present invention) at which the horn switch 181 is turned on. At this time, the respective link frames 131 and 132 rotate about the rotating shaft 129a in a direction (the direction indicated by the arrow in the figure) in which they approach each other, and the slide shafts 138 of the link frames 131 and 132 slides in the long holes 139 toward the outside thereof, that is, in a direction (in the direction indicated by the arrow in the figure) in which they recede from the rotating shaft 129a. Therefore, the moving support plate 118 and the stationery support plate 119 are moved in the direction in which they approach each other and thus the gap therebetween is narrowed. The movement directions of the link frames 131 and 132 and the slide shafts 138 about the rotating shaft 129a at this time are indicated by the arrows in Fig. 17. When the first switch contact 181a and the second switch contact 181 b come in contact with each other and are electrically connected to each other, the horn switch 181 is turned on, so that the horn works (rings).

At this time, in the present embodiment, since the module cover 114 is pressed and the movement direction of the airbag system 110 is defined by the link mechanism 129 and is accurately determined, the airbag system 110 is prevented from the inclined movement about the direction when it is moved from the initial position to the working position in the direction indicated by the arrow 20 of Fig. 14.

On the other hand, when a rider releases the pressing of the module cover 114 of the airbag system 110 in order to release the working of the horn, the airbag system 110 is moved to the initial position. At this time, the respective link frames 131 and 132 rotate about the rotating shaft 129a in the direction in which they recede from each other (in the opposite direction of the direction indicated by the arrow of Fig. 17) and the slide shafts 138 of the link frames 131 and 132 slide in the long holes 139 toward the inside thereof, that is, in the direction in which they approach the rotating shaft 129a (in the opposite direction of the direction indicated by the arrow of Fig. 17). Therefore, the moving support plate 118 and the stationery support plate 119 are moved in the direction in which they recede from each other and the gap therebetween are broadened. In the course of releasing the pressing of the module cover 114 by the rider, the contact between the first switch contact 181a and the second switch contact 181b is released and the horn switch 181 is turned off, so that the working of the horn is released.

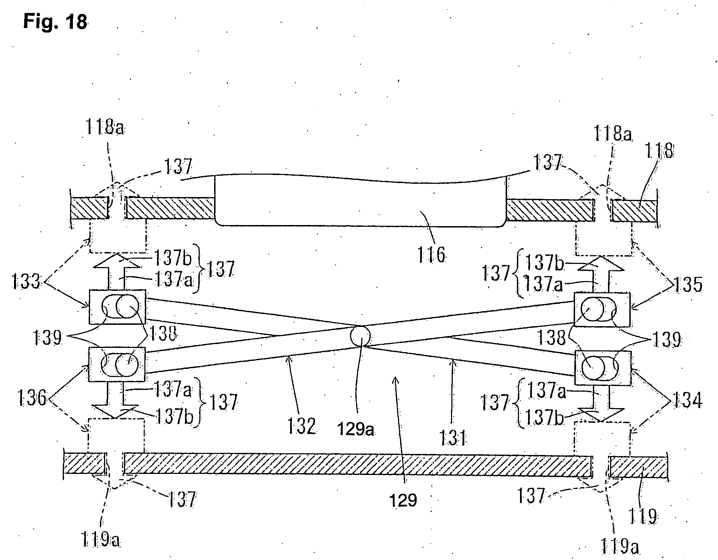

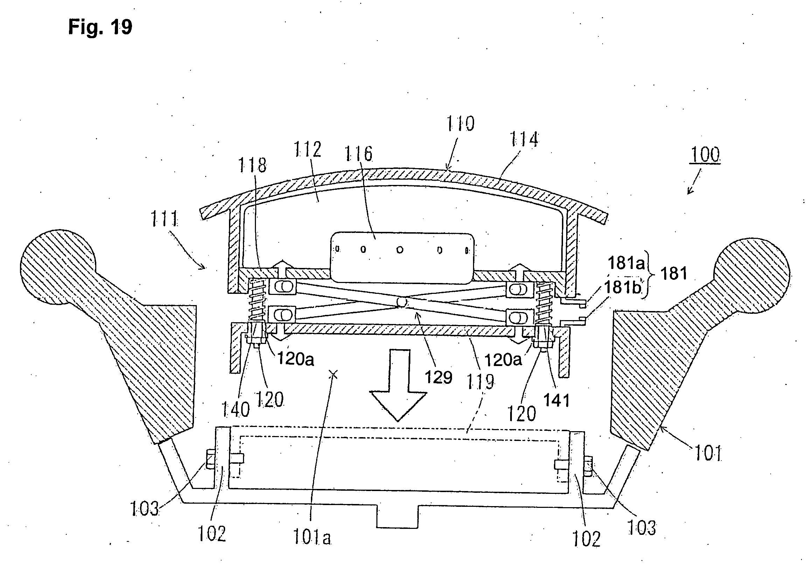

Next, a method of fitting main constituent elements in manufacturing the steering apparatus 100 having the aforementioned structure will be described with reference to Figs. 5 and 6. Here, a state where the link mechanism 129 according to the present embodiment is fixed to the moving support plate 118 and the stationery support plate 119 with the clips 137 is schematically shown in Fig. 18. A state where the airbag system 110 according to the present embodiment is fixed to a steering wheel 101 with fixing bolts 103 is schematically shown in Fig. 19.

In the present embodiment, the process of manufacturing the steering apparatus 100 is provided with a step (Step A) of fitting the link mechanism 129 between the moving support plate 118 and the stationery support plate 119.

Specifically, as shown in Fig. 18, by inserting the clip 137 provided in the upper bearing portion 133 of the first link frame 131 into the inserting hole 118a of the moving support plate 118 from the front end thereof (the pressing manipulation), the upper bearing portion 133 is fixed in a one-touch way to the moving support plate 118. In addition, by inserting the clip 137 provided in the lower bearing portion 134 of the first link frame 131 into the inserting hole 119a of the stationery support plate 119 from the front end thereof (the pressing manipulation), the lower bearing portion 134 is fixed in a one-touch way to the stationery support plate 119.

Similarly, by inserting the clip 137 provided in the upper bearing portion 135 of the second link frame 132 into the inserting hole 118a of the moving support plate 118 from the front end thereof (the pressing manipulation), the upper bearing portion 135 is fixed in a one-touch way to the moving support plate 118. In addition, by inserting the clip 137 provided in the lower bearing portion 136 of the second link frame 132 into the inserting hole 119a of the stationery support plate 119 from the front end thereof (the pressing manipulation), the lower bearing portion 136 is fixed in a one-touch way to the stationery support plate 119.

The state where the upper bearing portions 133 and 135 are fixed to the moving support plate 118 and the lower bearing portions 134 and 136 are fixed to the stationery support plate 119 at Step A is indicated by the two-dotted dashed line in Fig. 18. At this time, since the resin clips 137 have an axial portion 137a having a shape corresponding to the inserting holes 118a and 119a and a retaining portion 137b having a diameter larger than that of the axial portion 137a (than that of the inserting holes 118a and 119a), the respective bearing portions 133, 134, 135, and 136 is prevented from departing from the support plates 118 and 119 by the clips 137. That is, the link mechanism 129 can be easily and surely fixed (fitted) to the moving support plate 118 and the stationery support plate 119. As a result, the assembly 111 of a single body in which the moving support plate 118, the stationery support plate 119, the link mechanism 129, and the horn switch 181 are fitted to the airbag system 110 is completed.

At Step A, the link mechanism 129 having been once fixed to the moving support plate 118 and the stationery support plate 119 can be detached from the moving support plate 118 and the stationery support plate 119, by properly extracting the respective clips 137 from the inserting holes 118a and 119a. The bearing portions 133, 134, 135, and 136 and the respective clips 137 may be made of, for example, a hard rubber material or a metal material, in addition to the resin. The respective clips 137 may be integrally formed in the bearing portions 133, 134, 135, and 136, or, after individual formation thereof, may be detachably or fixedly attached to the respective bearing portions 133, 134, 135, and 136. Similarly, the respective bearing portions 133, 134, 135, and 136 may be integrally formed in the respective link frames 131 and 132, or, after individual formation thereof, may be detachably or fixedly attached to the respective link frames 131 and 132.

The process of manufacturing the steering apparatus 100 is provided with a step (Step B) of fixing the assembly 111 to the steering wheel 101, subsequently to Step A.

Specifically, as shown in Fig. 19, the assembly 111 is inserted into a recessed portion 101 a formed almost at the central position of the steering wheel 101. Then, the stationery support plate 119 is fixed to the bracket 102 of the steering wheel 101. Therefore, the assembly 111 is fixed to the steering wheel 101, thereby completing the steering apparatus 100 of the present embodiment.

In this way, in the present embodiment, the assembly 111 is prepared as a pre-assembled body (the "pre-assembled body" of the present invention) in which the assembly is fitted in advance, before being fitted to the steering wheel 101. At that time, since the link mechanism 129 can be easily fixed in a one-touch way to the moving support plate 118 and the stationery support plate 119 through the clips 137 provided in the respective bearing portions 133, 134, 135, and 136, the assembly 111 as the pre-assembled body can be formed very simply. Thus, it is possible to easily fix the pre-assembled body (the assembly 111) detachably to the steering wheel 101 with the fixing bolts 103.

As described above, according to the present embodiment, since the inclined movement when the module cover 114 is pressed and the airbag apparatus 110 is moved is prevented by the link mechanism 129, the pressing force by the pressing manipulation can be uniformly applied to the module cover 114, even when the rider presses any portion such as the center or the end of the module cover 114. Therefore, regardless of the positions of the module cover 114 pressed by the rider, the pressing force required for operating the horn can be kept constant, and it is thus possible to accomplish the smooth operation.

According to the present embodiment, the movement-direction defining means defining the movement direction of the airbag system 110 can be embodied using the link mechanism 129 simply comprised of the first link frame 131, the second link frame 132, and the rotating shaft 129a, etc.

According to the present embodiment, the link mechanism 129 can be easily fitted to the moving support plate 118 and the stationery support plate 119 through the clips 137.

According to the present embodiment, the movement of the airbag system 110 toward the working position and the initial position can be smoothly made in cooperation with the slide shafts 138 and the long holes 139 horizontally extending.

According to the present embodiment, since the coil springs 141 are disposed below the moving support plate 118, a foldable range of the airbag 112 or an arrangement range of the airbag 112 can be taken above the moving support plate 118, so that it is possible to enhance the degree of freedom in arrangement of the airbag 112.

According to the present embodiment, a reasonable construction in which the airbag mechanism is mounted in the steering apparatus 100 can be embodied.

According to the present embodiment, it is also possible to enhance the fitting ability (assembling ability) when the link mechanism 129 is fitted to the steering wheel 101, by utilizing the clips 137.

According to the present embodiment, it is possible to fit the assembly 111 to the steering wheel 101 and to detach the assembly from the steering wheel.

The present invention is not limited to the aforementioned embodiment, but various applications and modifications can be considered. For example, the following embodiments in which the aforementioned embodiment is modified can be put into practice.

In the aforementioned embodiment, it has been described that the link mechanism 129 defining the movement direction of the airbag system 110 which is moved by pressing the module cover 114 comprises two link frames 131 and 132 capable of rotating about the rotating shaft 129a. In the present invention, means having a function of a stabilizer controlling the movement direction of the airbag system 110 can be utilized, and the number, shape, combination, etc. of the constituent elements (link frames 131 and 132, rotating shaft 129a, bearing portions 133, 134, 135, and 136, clips 137, etc.) constituting the link mechanism 129 can be changed properly as needed.

Although it has been described in the above embodiment that the bearing portions 133, 134, 135, and 136 are provided correspondingly to both ends of the respective link frames 131 and 132 in the link mechanism 129, the present invention may employ a structure different from the above structure. For example, a structure in which the upper bearing portion 133 and the lower bearing portion 136 are omitted, the first link frame 131 permits only the rotation at the upper end and the second link frame 132 permits only the rotation at the lower end may be employed. In this case, similarly to the case where the link mechanism 129 according to the present embodiment is employed, the smooth movement of the airbag system 110 can be made.

Although it has been described in the above embodiment that the long holes 139 fitted with the slide shafts 138 are formed as the longitudinal hole linearly extending in the link mechanism 129, the present invention may employ various shapes of the long holes 139, only if the desired cooperation with the slide shafts 138 can be obtained. For example, long holes extending in a curved shape or long holes extending in a stepped shape can be formed as the long holes.

Although it has been described in the above embodiment that the assembly 111 as a single body in which the airbag system 110, the moving support plate 118, the stationery support plate 119, the link mechanism 129, and the horn switch 181 are provided is post-fitted to the steering wheel 101, the assembling structure of the present invention may be changed variously as needed. For example, a structure that the moving support plate 118, the stationery support plate 119, and the link mechanism 129 are previously fitted (pre-assembled) to the steering wheel 101 and then the airbag system 110 is post-fitted to the pre-assembled body may be employed.

Although the structure of the steering apparatus of an automobile having a horn switch has been described in the aforementioned embodiment, the present invention may be also applied to a vehicle other than an automobile having a horn switch, such as a ship, an electric train, etc.

Considering the aforementioned embodiments or various modifications, the present invention may employ the structures according to Modifications 1 to 13 described below.

### (Modification 1)

The present invention may employ a structure (Modification 1; see also claim 21) of "an airbag system for a vehicle which is fitted to a steering wheel of the vehicle and in which at least an airbag unfolded and expanded in a rider protecting area at the time of collision of the vehicle and a gas supply means supplying unfolding and expanding gas to the airbag are housed in an airbag housing portion, wherein a horn works by pressing the airbag housing portion to move the airbag housing portion to a working position and the working of the horn stops by releasing the pressing of the airbag housing portion to move the airbag housing portion to an initial position, wherein the airbag system comprises movement-direction defining means which can define the movement direction of the pressing portion, and wherein the movement-direction defining means permits movement of the airbag housing portion having been pressed in a predetermined direction passing through the initial position and the working position and regulates movement of the airbag housing portion in a direction other than the predetermined direction."

Therefore, according to Modification 1, the pressing force required for allowing the horn to work can be kept constant, regardless of positions of the airbag housing portion (pressing portion) which are pressed by a rider, so that it is possible to accomplish the smooth working of the airbag system.

### (Modification 2)

The present invention may employ a structure (Modification 2) of "the airbag system according to Modification 1, wherein the movement-direction defining means has a structure in which a plurality of long link frames is connected to a rotating shaft, one end of each link frame is fixed to the airbag housing portion, and the other end of each link frame is fixed to a base portion of the airbag system, and wherein the airbag housing portion and the base portion approach each other by rotating the plurality of link frames about the rotating shaft in an approaching direction in which the plurality of link frames approach each other, while the airbag housing portion and the base portion recede from each other by rotating the plurality of link frames about the rotating shaft in a receding direction in which the plurality of link frames recede from each other".

Therefore, according to the structure of Modification 2, the movement-direction defining means defining the movement direction of the airbag housing portion (the pressing portion) can be embodied with a simple structure employing the plurality of long link frames and the rotating shaft.

### (Modification 3)

The present invention may employ a structure (Modification 3) of "the airbag system according to Modification 2, wherein the movement-direction defining means has a structure in which one end of each link frame is fixed in a one-touch way to the airbag housing portion through a clip and the other end of each link frame is fixed in a one-touch way to the base portion through a clip".

Therefore, according to the structure of Modification 3, the movement-direction defining means comprising the plurality of long link frames and the rotating shaft can be easily fitted to the airbag housing portion (the pressing portion) and the base portion through the clips.

### (Modification 4)

The present invention may employ a structure (Modification 4) of "the airbag system according to Modification 2 or 3, wherein the airbag housing portion or the base portion has a longitudinally-opened long hole and at least one end of each link frame comprises a locking portion which is movable along the long hole, and wherein the locking portion is moved along the long hole, when the plurality of link frames rotates in the approaching direction or the receding direction about the rotating shaft".

Therefore, according to the structure of Modification 4, the movement of the airbag housing portion (the pressing portion) toward the working position and the initial position can be smoothly carried out through cooperation between the locking portion and the long hole.

### (Modification 5)

The present invention may employ a structure (Modification 5) of "the airbag system according to any one of Modifications 1 to 4, wherein the movement-direction defining means is provided as a pre-assembled body in which the movement-direction defining means is fitted in advance to the airbag housing portion, when the airbag system is mounted on the steering wheel of a vehicle".

Therefore, according to the structure of Modification 5, it is possible to enhance fitting ability (assembling ability) when the movement-direction defining means is fitted to the steering wheel of a vehicle.

### (Modification 6)

The present invention may employ a structure (Modification 6) of "the airbag system according to any one of Modifications 1 to 5, wherein biasing means for biasing the airbag housing portion toward the initial position is disposed below the airbag housing portion".

Therefore, according to the structure of Modification 6, the foldable range of the airbag or the arrangement range of the airbag can be widely taken above the airbag housing portion (the pressing portion), thereby enhancing the degree of freedom in arrangement of the airbag.

The airbag system according to Modifications 1 to 6 is specified as an airbag system having almost the same structure as a steering apparatus having the structure according to above described aspects.

### (Modification 7)

The present invention may employ a structure (Modification 7; see also claim 22) of "a horn switch apparatus for a vehicle which is fitted to a steering wheel of the vehicle and in which a horn works by pressing a pressing portion to move the pressing portion to a working position and the working of the horn stops by releasing the pressing of the pressing portion to move the pressing portion to an initial position, the steering apparatus comprising movement-direction defining means which can define the movement direction of the pressing portion, wherein the movement-direction defining means permits movement of the pressing portion having been pressed in a predetermined direction passing through the initial position and the working position and regulates movement of the pressing portion in a direction other than the predetermined direction".

Therefore, according to the structure of Modification 7, the pressing force required for allowing the horn to work can be kept constant, regardless of positions of the pressing portion which are pressed by a rider, so that it is possible to accomplish the smooth working of the horn switch apparatus.

### (Modification 8)

The present invention may employ a structure (Modification 8) of "the horn switch apparatus according to Modification 7, wherein the movement-direction defining means has a structure in which a plurality of long link frames is connected to a rotating shaft, one end of each link frame is fixed to the pressing portion, and the other end of each link frame is fixed to a base portion of the horn switch apparatus, and wherein the pressing portion and the base portion approach each other by rotating the plurality of link frames about the rotating shaft in an approaching direction in which the plurality of link frames approach each other, while the pressing portion and the base portion recede from each other by rotating the plurality of link frames about the rotating shaft in a receding direction in which the plurality of link frames recede from each other".

Therefore, according to the structure of Modification 8, the movement-direction defining means defining the movement direction of the pressing portion can be embodied with a simple structure employing the plurality of long link frames and the rotating shaft.

The hom switch apparatus according to Modification 7 and 8 is specified as a hom switch apparatus having almost the same structure as the steering apparatus according to the above described aspects.

### (Modification 9)

The present invention may employ a structure (Modification 9) of "the horn switch apparatus according to Modification 8, wherein the movement-direction defining means has a structure in which one end of each link frame is fixed in a one-touch way to the pressing portion through a clip and the other end of each link frame is fixed in a one-touch way to the base portion through a clip".

The airbag system according to Modification 9 is specified as a horn switch apparatus having almost the same structure as the steering apparatus according to above described aspects.

Therefore, according to the structure of Modification 9, the movement-direction defining means comprising the plurality of long link frames and the rotating shaft can be easily fitted to the pressing portion and the base portion through the clips.

### (Modification 10)

The present invention may employ a structure (Modification 10) of "the horn switch apparatus according to Modification 8 or 9, wherein the pressing portion or the base portion has a longitudinally-opened long hole and at least one end of each link frame comprises a locking portion which is movable along the long hole, and wherein the locking portion is moved along the long hole, when the plurality of link frames rotates in the approaching direction or the receding direction about the rotating shaft".

Therefore, according to the structure of Modification 10, the movement of the pressing portion toward the working position and the initial position can be smoothly carried out through cooperation between the locking portion and the long hole.

### (Modification 11)

The present invention may also employ a structure (Modification 11) of "the horn switch apparatus according to any one of Modifications 7 to 10, wherein the pressing portion is mounted with at least an airbag to be unfolded and expanded in a rider-protecting area at the time of collision of a vehicle, an airbag cover covering the rider side of the airbag, and gas supply means supplying unfolding and expanding gas to the airbag".

Therefore, according to the structure of Modification 11, a reasonable structure in which the airbag mechanism is mounted on the pressing portion can be obtained.

### (Modification 12)

The present invention may employ a structure (Modification 12) of "the horn switch apparatus according to any one of Modifications 7 to 11, wherein the movement-direction defining means is provided as a pre-assembled body in which the movement-direction defining means is fitted in advance to the pressing portion, when the horn switch apparatus is mounted on the steering wheel of a vehicle".

Therefore, according to the structure of Modification 12, it is possible to enhance fitting ability when the movement-direction defining means is fitted to the steering wheel of a vehicle.

The horn switch apparatus according to Modification 10, 11 and 12 is specified as a horn switch apparatus having almost the same structure as the steering apparatus according to the above described aspects.

### (Modification 13)

The present invention may employ a structure (Modification 13) of "the horn switch apparatus according to any one of Modifications 7 to 12, wherein biasing means for biasing the pressing portion toward the initial position is disposed below the pressing portion".

The airbag system according to Modification 13 is specified as a horn switch apparatus having almost the same structure as the steering apparatus according to the above described aspects.

Therefore, according to the structure of Modification 13, it is advantageous for enhancing the degree of freedom in arrangement of elements disposed above the pressing portion. For example, in the structure having the airbag described in Modification 11, the foldable range of the airbag or the arrangement range of the airbag can be widely taken above the pressing portion, thereby enhancing the degree of freedom in arrangement of the airbag.

## Claims

1. A steering apparatus comprising:
an airbag system body provided in a steering wheel;
guiding means guiding parallel movement of the airbag system body or a module cover thereof in a steering axis direction; and
a horn switch the contacts of which are closed by means of the movement of the airbag system body or the module cover,
wherein the guiding means comprises arms of which one ends are engaged with each other, the other ends extend in a direction in which they recede from each other, and the one ends are connected so as to freely rotate about the steering wheel, and
wherein the other ends of the arms are connected to a bottom portion of the airbag system body or the module cover.

2. The steering apparatus according to claim 1,
wherein the guiding means comprises arms of which one ends are locked with each other, the other ends extend in a direction in which they recede from each other, and the one ends are connected so as to freely rotate about the steering wheel in the steering axis direction,
wherein the one ends of the arms are locked with each other such that when one arm rotates in the steering axis direction, the arms rotate in the same steering axis direction while interlocking with the rotation of the one arm, and
wherein the other ends of the arms are connected to the airbag system body or the module cover.

3. The apparatus according to claim 2
wherein the other ends of the arms are connected to a bottom portion of the airbag system body or the module cover.

4. The apparatus according to claim 1, 2 or 3,
wherein the one ends of the arms are engaged or locked with each other.

5. The apparatus according to claim 4,
wherein the one end of each arm is provided with a pinion and the pinions are engaged with each other.

6. The apparatus according to claim 2 or 3,
wherein the one end of the one arm is provided with a protruding portion protruding toward a counter arm,
wherein the one end of the counter arm is provided with a locking portion, and
wherein the protruding portion and the locking portion are locked with each other.

7. The apparatus according to claim 6,
wherein the locking portion is a concave portion.

8. The apparatus according to any one of claims 2 to 7,
wherein a spring biasing the airbag system body or the module cover is provided as biasing means biasing the horn switch in a contact-opening direction.

9. The apparatus according to any one of claims 2 to 7,
wherein a spring is attached to the arms, as biasing means biasing the horn switch in a contact-opening direction.

10. The apparatus according to claim 2 or 3,
wherein the one ends of the arms are locked so as to be interlocked with each other through springs, and
wherein the springs bias the arms in a direction in which the contacts of the horn switch are opened.

11. The apparatus according to claim 10,
wherein each spring has a wound portion and a stretched portion stretched from the wound portion in a direction in which they recede from each other,
wherein the wound portion is retained in the one arm, and
wherein one end of the stretched portion is fixed to the one arm and the other end of the stretched portion is fixed to the other arm.

12. The apparatus according to claim 11,
wherein the one arm is provided with a spring retaining protrusion and the wound portion of each spring is fitted to the spring retaining protrusion.

13. A steering apparatus for a vehicle which is fitted to a steering wheel of the vehicle and in which a horn works by pressing a pressing portion to move the pressing portion to a working position and the working of the horn stops by releasing the pressing of the pressing portion to move the pressing portion to an initial position,
the steering apparatus comprising movement-direction defining means which can define the movement direction of the pressing portion,
wherein the movement-direction defining means permits movement of the pressing portion having been pressed in a predetermined direction passing through the initial position and the working position and regulates movement of the pressing portion in a direction other than the predetermined direction.

14. The steering apparatus according to claim 13,
wherein the movement-direction defining means has a structure in which a plurality of long link frames is connected to a rotating shaft, one end of each link frame is fixed to the pressing portion, and the other end of each link frame is fixed to a base portion of a horn switch, and
wherein the pressing portion and the base portion approach each other by rotating the plurality of link frames about the rotating shaft in an approaching direction in which the plurality of link frames approach each other, while the pressing portion and the base portion recede from each other by rotating the plurality of link frames about the rotating shaft in a receding direction in which the plurality of link frames recede from each other.

15. The steering apparatus according to claim 14,
wherein the movement-direction defining means has a structure in which one end of each link frame is fixed in a one-touch way to the pressing portion through a clip and the other end of each link frame is fixed in a one-touch way to the base portion through a clip.

16. The steering apparatus according to claim 14 or 15,
wherein the pressing portion or the base portion has a longitudinally-opened long hole and at least one end of each link frame comprises a locking portion which is movable along the long hole, and
wherein the locking portion is moved along the long hole when the plurality of link frames rotates in the approaching direction or the receding direction about the rotating shaft.

17. The steering apparatus according to any one of claims 13 to 16,
wherein the pressing portion is mounted with at least an airbag to be unfolded and expanded in a rider-protecting area at the time of collision of a vehicle, an airbag cover covering the rider side of the airbag, and gas supply means supplying unfolding and expanding gas to the airbag.

18. The steering apparatus according to any one of claims 13 to 17,
wherein the movement-direction defining means is provided as a pre-assembled body in which the movement-direction defining means is fitted in advance to the pressing portion, when the steering apparatus is mounted on the steering wheel of a vehicle.

19. The steering apparatus according to any one of claims 13 to 18,
wherein biasing means for biasing the pressing portion toward the initial position is disposed below the pressing portion.

20. An airbag system in combination with a steering apparatus according to any one of claims 1 to 19.

21. An airbag system for a vehicle with or without a steering apparatus according to any one of claims 1 to 19 and which is fitted to a steering wheel of the vehicle and in which at least an airbag unfolded and expanded in a rider protecting area at the time of collision of the vehicle and a gas supply means supplying unfolding and expanding gas to the airbag are housed in an airbag housing portion, wherein a horn works by pressing the airbag housing portion to move the airbag housing portion to a working position and the working of the horn stops by releasing the pressing of the airbag housing portion to move the airbag housing portion to an initial position, wherein the airbag system comprises movement-direction defining means which can define the movement direction of the pressing portion, and wherein the movement-direction defining means permits movement of the airbag housing portion having been pressed in a predetermined direction passing through the initial position and the working position and regulates movement of the airbag housing portion in a direction other than the predetermined direction.

22. A horn switch apparatus for a vehicle with or without a steering apparatus according to any one of claims 1 to 19 and which is fitted to a steering wheel of the vehicle and in which a horn works by pressing a pressing portion to move the pressing portion to a working position and the working of the horn stops by releasing the pressing of the pressing portion to move the pressing portion to an initial position, the steering apparatus comprising movement-direction defining means which can define the movement direction of the pressing portion, wherein the movement-direction defining means permits movement of the pressing portion having been pressed in a predetermined direction passing through the initial position and the working position and regulates movement of the pressing portion in a direction other than the predetermined direction.
